(19) Europäisches Patentamt / European Patent Office / Office européen des brevets

(11) **EP 4 776 551 A1**

(12) **EUROPEAN PATENT APPLICATION**
published in accordance with Art. 153(4) EPC

(43) Date of publication:
**15.07.2026 Bulletin 2026/29**

(21) Application number: **24861772.2**

(22) Date of filing: **09.08.2024**

(51) International Patent Classification (IPC):
**H04L 5/00** (2006.01)

(52) Cooperative Patent Classification (CPC):
**H04B 7/06; H04L 1/1812; H04L 5/00; H04W 4/40; H04W 72/40**

(86) International application number:
**PCT/CN2024/111161**

(87) International publication number:
**WO 2025/050928 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 CN 202311162646**

(71) Applicant: **HUAWEI TECHNOLOGIES CO., LTD.**
**Shenzhen 518129 (CN)**

(72) Inventors:
• **YI, Feng**
 **Shenzhen, Guangdong 518129 (CN)**
• **SU, Hongjia**
 **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA TRANSMISSION METHOD AND APPARATUS**

(57) Disclosed are a data transmission method and an apparatus. The method includes: receiving M pieces of sidelink data on X carriers, where the M pieces of sidelink data include first sidelink data, the X carriers include a first carrier, the first sidelink data is located on the first carrier; and sending, on a second carrier in the X carriers, first sidelink feedback information corresponding to the first sidelink data, where a first sidelink resource on which the first sidelink data is located corresponds to a plurality of PSFCH resources, the plurality of PSFCH resources are located on at least two carriers, the first sidelink feedback information is located on a first PSFCH resource, and the first PSFCH resource is one of the plurality of PSFCH resources. According to the method, after the first sidelink data is received on the first carrier, the first sidelink feedback information corresponding to the first sidelink data may be sent on the second carrier, so that sidelink feedback information is sent across carriers, thereby increasing an opportunity of sending the sidelink feedback information and improving sidelink communication efficiency.

FIG. 4

**Description**

CROSS-REFERENCE TO RELATED APPLICATIONS

This application claims priority to Chinese Patent Application No. 202311162646.5, filed with the China National Intellectual Property Administration on September 8, 2023 and entitled "DATA TRANSMISSION METHOD AND APPARATUS", which is incorporated herein by reference in its entirety.

TECHNICAL FIELD

This application relates to the field of communication technologies, and in particular, to a data transmission method and an apparatus.

BACKGROUND

A sidelink (sidelink, SL) communication technology is defined in the 3rd generation partnership project (the 3rd generation partnership project, 3GPP), and a typical application scenario includes vehicle-to-everything (vehicle-to-everything, V2X). To improve reliability of data transmission, in V2X, a physical sidelink feedback channel (physical sidelink feedback channel, PSFCH) is supported, and a physical layer hybrid automatic repeat request (hybrid automatic repeat request, HARQ)-acknowledgment (acknowledgment, ACK) feedback technology is used to feed back data transmitted on the sidelink.

To provide a higher service rate, a carrier aggregation (carrier aggregation, CA) technology is introduced in the sidelink. However, when both the PSFCH and the carrier aggregation are introduced in the V2X scenario, how a terminal device performs feedback still needs to be further studied.

SUMMARY

This application provides a data transmission method and an apparatus, to implement feedback on data transmitted on a sidelink in a carrier aggregation scenario, thereby improving reliability of data transmission on the sidelink.

According to a first aspect, this application provides a data transmission method. The method is applicable to a scenario, for example, V2X. The method is executed by a second device or a module or a chip in a second device. Herein, an example in which the second device is an execution body is used for description. In this method, M pieces of sidelink data are received on X carriers, where the M pieces of sidelink data include first sidelink data, the X carriers include a first carrier, the first sidelink data is located on the first carrier, X is an integer greater than 0, and M is an integer greater than or equal to X. First sidelink feedback information corresponding to the first sidelink data is sent on a second carrier in the X carriers. Alternatively, P pieces of sidelink feedback information corresponding to P pieces of sidelink data in the M pieces of sidelink data are sent in a third slot, where the P pieces of sidelink feedback information are located on Y carriers, Y is an integer greater than 0, and P is an integer less than or equal to M. A first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources. X pieces of sidelink data include first sidelink data, and X pieces of sidelink feedback information include first sidelink feedback information corresponding to the first sidelink data. A first sidelink resource on which the first sidelink data is located is located on a first carrier in the X carriers, and a first PSFCH resource on which the first sidelink feedback information is located is located on a second carrier in the Y carriers. The first sidelink resource corresponds to a plurality of PSFCH resources, the plurality of PSFCH resources are located on at least two carriers, and the first PSFCH resource is one of the plurality of PSFCH resources.

According to the method provided in this application, after receiving the first sidelink data on the first carrier, the second device may send, on the second carrier, the first sidelink feedback information corresponding to the first sidelink data, so that the sidelink feedback information is sent across carriers in a carrier aggregation scenario, thereby increasing an opportunity of sending the sidelink feedback information and improving sidelink communication efficiency.

According to a second aspect, this application provides a data transmission method. The method is applicable to a scenario, for example, V2X. The method is executed by a first device or a module or a chip in a first device. Herein, an example in which the first device is an execution body is used for description. In this method, M pieces of sidelink data are sent on X carriers, where the M pieces of sidelink data include first sidelink data, the X carriers include a first carrier, the first sidelink data is located on the first carrier, X is an integer greater than 0, and M is an integer greater than or equal to X. First sidelink feedback information corresponding to the first sidelink data is received on a second carrier in the X carriers. Alternatively, P pieces of sidelink feedback information corresponding to P pieces of sidelink data in the M pieces of sidelink data are sent in a third slot, where the P pieces of sidelink feedback information are located on Y carriers, Y is an integer greater than 0, and P is an integer less than or equal to M. A first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources. X pieces of sidelink data include first sidelink data, and X pieces of sidelink feedback information include first sidelink feedback information corresponding to the first sidelink data. A first sidelink resource on which the first sidelink data is located is located on a first carrier in the X carriers, and a first PSFCH resource on which the first sidelink feedback information is located is located on a second carrier in the Y carriers. The first sidelink resource corresponds to a plurality of PSFCH resources, the plurality of PSFCH resources are located on at least two carriers, and the first PSFCH resource is one of the plurality of PSFCH resources.

With reference to the first aspect or the second aspect, in a possible implementation, the method further includes: determining, based on third information, that a second resource set on the second carrier includes a PSFCH resource corresponding to a first resource set on the first carrier, where the third information indicates that there is a correspondence between the first resource set and at least two resource sets on the at least two carriers, the at least two carriers include the second carrier, the first sidelink resource belongs to the first resource set on the first carrier, and the first PSFCH resource belongs to the second resource set.

In the foregoing procedure, a correspondence between resource sets on carriers is established, so that a sidelink resource in one resource set is associated with PSFCH resources in a plurality of resource sets. In this way, when cross-carrier sidelink feedback information transmission needs to be performed for one carrier, a PSFCH resource required for transmitting the sidelink feedback information can be obtained from another carrier, thereby increasing an opportunity of transmitting the sidelink feedback information.

With reference to the first aspect or the second aspect, in a possible implementation, the third information is predefined or preconfigured, or is configured by a network.

With reference to the first aspect or the second aspect, in a possible implementation, the first sidelink resource is located in a first slot, a PSFCH resource in the plurality of PSFCH resources that belongs to the first resource set is located in a second slot, a PSFCH resource in the plurality of PSFCH resources that belongs to the second resource set is located in a third slot, and an index of the second slot is the same as an index of the third slot, where the first sidelink resource belongs to the first resource set on the first carrier, and the first PSFCH resource belongs to the second resource set on the second carrier.

In the method, when cross-carrier sidelink feedback information transmission is performed, on the second carrier, for the sidelink data on the first carrier, a slot in which the sidelink feedback information is sent on the second carrier is still the same as a slot in which the sidelink feedback information is sent on the first carrier. That is, the second slot and the third slot are a same slot, so that PSFCH slots used to feed back the first sidelink data on the first carrier and the second carrier can be aligned. Therefore, an existing resource selection time sequence relationship is not changed even if cross-carrier feedback is performed, a resource selection process is not affected, and system compatibility is improved.

With reference to the first aspect or the second aspect, in a possible implementation, the first sidelink resource is located in a first slot, a PSFCH resource in the plurality of PSFCH resources that belongs to the second resource set is located in a third slot, the third slot is determined based on the first slot and first duration, and the first PSFCH resource belongs to the second resource set on the second carrier.

In the method, when cross-carrier sidelink feedback information transmission is performed, on the second carrier, for the sidelink data on the first carrier, the third slot in which the sidelink feedback information is sent on the second carrier is still determined based on the first duration corresponding to the first carrier. However, because a periodicity of a PSFCH slot on the second carrier may be less than a periodicity of a PSFCH slot on the first carrier, the third slot may be earlier relative to the second slot, that is, time at which the sidelink feedback information is sent on the second carrier may be earlier relative to time at which the sidelink feedback information is sent on the first carrier. In this way, when cross-carrier sidelink feedback information transmission is performed, the sidelink feedback information may be sent in advance, so that a delay of the sidelink feedback information can be reduced.

With reference to the first aspect or the second aspect, in a possible implementation, the first sidelink resource is located in a first slot, a PSFCH resource in the plurality of PSFCH resources that belongs to the first resource set is located in a second slot, and a PSFCH resource in the plurality of PSFCH resources that belongs to the second resource set is located in a third slot, where the first sidelink resource belongs to the first resource set on the first carrier, the first PSFCH resource belongs to the second resource set on the second carrier, the second slot is determined based on the first slot and first duration, and the third slot is determined based on the first slot and second duration.

In the method, when cross-carrier sidelink feedback information transmission is performed, on the second carrier, for the sidelink data on the first carrier, the third slot in which the sidelink feedback information is sent on the second carrier is determined based on the second duration corresponding to the second carrier. In this way, for same sidelink feedback information, when the sidelink feedback information is sent on different carriers, slots in which the sidelink feedback information is located are determined based on different duration, thereby improving flexibility of sending the sidelink feedback information.

With reference to the first aspect or the second aspect, in a possible implementation, the first PSFCH resource belongs to the second resource set on the second carrier, and the method further includes:
determining a first PSFCH frequency domain resource set based on first information, where the first PSFCH frequency domain resource set includes at least one PSFCH frequency domain resource unit located in the second resource set, the first information indicates the at least one PSFCH frequency domain resource unit, and a PSFCH frequency domain resource unit included in the first PSFCH resource is one of the at least one PSFCH frequency domain resource unit.

With reference to the first aspect or the second aspect, in a possible implementation, the first information is predefined or preconfigured, or is configured by the network.

With reference to the first aspect or the second aspect, in a possible implementation, the at least one PSFCH frequency domain resource unit is used to transmit sidelink feedback information corresponding to sidelink data in at least one resource set, the at least one resource set includes the first resource set but does not include the second resource set, and the first sidelink resource belongs to the first resource set.

With reference to the first aspect or the second aspect, in a possible implementation, the at least one PSFCH frequency domain resource unit is used to transmit sidelink feedback information corresponding to sidelink data in the first resource set.

With reference to the first aspect or the second aspect, in a possible implementation, the second resource set includes N physical resource blocks, the first information includes N bits, N is an integer greater than 0, and the N bits one-to-one correspond to the N physical resource blocks; and

when a value of a first bit in the N bits is a first value, it indicates that a physical resource block in the N physical resource blocks that corresponds to the first bit is a PSFCH frequency domain resource unit used to transmit the sidelink feedback information; or
when a value of a first bit is a second value, it indicates that a physical resource block in the N physical resource blocks that corresponds to the first bit is not a PSFCH frequency domain resource unit used to transmit the sidelink feedback information.

With reference to the first aspect or the second aspect, in a possible implementation, the method further includes:
determining, based on the first PSFCH frequency domain resource set, a quantity $M_{\text{subch, slot}}^{\text{PSFCH}}$ of PSFCH frequency domain resource units in the second resource set that correspond to a subchannel in the first resource set.

With reference to the first aspect or the second aspect, in a possible implementation, the method further includes:
determining, based on second information and the quantity $M_{\text{subch, slot}}^{\text{PSFCH}}$ of PSFCH frequency domain resource units, $R_{PRB, \text{CS}}^{PSFCH}$ PSFCH resources in the second resource set that correspond to the first sidelink resource.

With reference to the first aspect or the second aspect, in a possible implementation, the first PSFCH frequency domain resource set is used to transmit sidelink feedback information corresponding to sidelink data in at least one resource set, and the quantity $M_{\text{subch, slot}}^{\text{PSFCH}}$ of PSFCH frequency domain resource units satisfies the following form:

$$M_{\text{subch, slot}}^{\text{PSFCH}} = M_{\text{PRB, set}}^{\text{PSFCH}} / \left( \sum_{i=1}^{n} (N_{\text{subch,i}}) \cdot N_{\text{PSSCH}}^{\text{PSFCH}} \right).$$

$M_{\text{PRB, set}}^{\text{PSFCH}}$ represents a quantity of PSFCH frequency domain resource units included in the first PSFCH frequency domain resource set, $N_{\text{subch,i}}$ represents a quantity of subchannels included in an $i^{th}$ resource set in the at least one resource set, and $N_{\text{PSSCH}}^{\text{PSFCH}}$ represents a periodicity of a PSFCH resource corresponding to the second resource set.

With reference to the first aspect or the second aspect, in a possible implementation, the first PSFCH frequency domain resource set is used to transmit sidelink feedback information corresponding to sidelink data in the first resource set, and the quantity $M_{\text{subch, slot}}^{\text{PSFCH}}$ of PSFCH frequency domain resource units satisfies the following form:

$$M_{\text{subch, slot}}^{\text{PSFCH}} = M_{\text{PRB, set}}^{\text{PSFCH}} / \left( N_{\text{subch,1}} \cdot N_{\text{PSSCH}}^{\text{PSFCH}} \right).$$

$M_{\text{PRB, set}}^{\text{PSFCH}}$ represents a quantity of PSFCH frequency domain resource units included in the first PSFCH frequency domain resource set, $N_{\text{subch,1}}$ represents a quantity of subchannels included in the first resource set, and $N_{\text{PSSCH}}^{\text{PSFCH}}$

represents a periodicity of a PSFCH resource corresponding to the second resource set.

With reference to the first aspect or the second aspect, in a possible implementation, the method further includes: determining the first PSFCH resource in the $R_{PRB,\,CS}^{PSFCH}$ PSFCH resources based on a first identifier and a second identifier, where the first identifier is located in the first sidelink data, and the second identifier is preconfigured or preset, or is configured by the network, or is indicated by using higher layer signaling.

With reference to the first aspect, in a possible implementation, the method further includes: sending, on the second carrier, second sidelink feedback information corresponding to second sidelink data, where the M pieces of sidelink data include the second sidelink data, and the second sidelink data is located on the second carrier.

According to a third aspect, this application further provides a communication apparatus. The communication apparatus can implement any method in any one of the first aspect and the second aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus to perform a corresponding function of a network device or a terminal device in the foregoing method. The communication apparatus further includes a memory, and the memory may be coupled to the processor, and stores program instructions and data that are necessary for the communication apparatus. Optionally, the communication apparatus further includes an interface circuit. The interface circuit is configured to support communication between the communication apparatus and a device such as a terminal apparatus.

In a possible implementation, the communication apparatus includes corresponding functional modules configured to implement the steps in the foregoing method. The function may be implemented by hardware, or may be implemented by executing corresponding software by hardware. The hardware or software includes one or more modules corresponding to the foregoing function.

In a possible implementation, a structure of the communication apparatus includes a processing unit and a transceiver unit. These units may perform corresponding functions in the foregoing method examples. For details, refer to the descriptions in the method provided in any one of the first aspect or the second aspect. Details are not described herein.

According to a fourth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any possible implementation of any one of the first aspect and the second aspect through a logic circuit or by executing code instructions.

According to a fifth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the functional modules in the methods in any possible implementation of any one of the first aspect and the second aspect through a logic circuit or by executing code instructions.

According to a sixth aspect, a computer-readable storage medium is provided. The computer-readable storage medium stores a computer program or instructions. When the computer program or the instructions are executed by a processor, the method in any possible implementation of any one of the first aspect and the second aspect is implemented.

According to a seventh aspect, a computer program product storing instructions is provided. When the instructions are run by a processor, the method in any possible implementation of any one of the first aspect and the second aspect is implemented.

According to an eighth aspect, a circuit is provided. The circuit is configured to perform the method in any possible implementation of any one of the first aspect and the second aspect. The circuit may include a chip circuit. Optionally, the circuit may be further coupled to a memory.

According to a ninth aspect, a chip is provided. The chip includes a processor, configured to implement the method in any possible implementation of any one of the first aspect and the second aspect. Optionally, the chip may further include a memory. The chip may include a chip, or may include a chip and another discrete device.

According to a tenth aspect, an embodiment of this application further provides a communication system. The communication system includes a second device configured to implement the method in the first aspect and any possible implementation of the first aspect, and a first device configured to implement the method in the second aspect and any possible implementation of the second aspect.

BRIEF DESCRIPTION OF DRAWINGS

FIG. 1A is a diagram of a communication system according to an embodiment of this application;

FIG. 1B is a diagram of a communication system according to an embodiment of this application;

FIG. 1C is a diagram of a communication system according to an embodiment of this application;

FIG. 2 is a diagram of a structure of a network device according to an embodiment of this application;

FIG. 3A is a diagram of a carrier and a resource pool according to an embodiment of this application;

FIG. 3B is a diagram of a time domain resource in a resource pool according to an embodiment of this application;

FIG. 3C is a diagram of a frequency domain resource in a resource pool according to an embodiment of this application;

FIG. 3D is a diagram of a PSFCH configuration periodicity according to an embodiment of this application;

FIG. 3E is a diagram of a PSFCH resource according to an embodiment of this application;

FIG. 3F is a diagram of a PSSCH feedback time interval according to an embodiment of this application;

FIG. 3G is a diagram of a correspondence between a PSSCH resource and a PSFCH resource according to an embodiment of this application;

FIG. 3H is a diagram of an interlaced resource according to an embodiment of this application;

FIG. 4 is a schematic flowchart of a data transmission method according to an embodiment of this application;

FIG. 5 is a diagram of subcarrier configuration according to an embodiment of this application;

FIG. 6 is a diagram of orthogonal PSFCH resources according to an embodiment of this application;

FIG. 7 is a diagram of orthogonal PSFCH resources according to an embodiment of this application;

FIG. 8 is a diagram of a time domain location relationship between sidelink data and sidelink feedback information according to an embodiment of this application;

FIG. 9 is a diagram of a time domain location relationship between sidelink data and sidelink feedback information according to an embodiment of this application;

FIG. 10 is a diagram of a time domain location relationship between sidelink data and sidelink feedback information according to an embodiment of this application;

FIG. 11 is a diagram of a time domain location relationship between sidelink data and sidelink feedback information according to an embodiment of this application;

FIG. 12 is a diagram of a time domain location relationship between sidelink data and sidelink feedback information according to an embodiment of this application;

FIG. 13 is a diagram of a PSFCH frequency domain resource set according to an embodiment of this application;

FIG. 14 is a diagram in which PSFCH frequency domain information indicates a PSFCH frequency domain resource unit according to an embodiment of this application;

FIG. 15 is a diagram of a PSFCH frequency domain resource set according to an embodiment of this application;

FIG. 16 is a diagram in which PSFCH frequency domain information indicates a PSFCH frequency domain resource unit according to an embodiment of this application;

FIG. 17 is a diagram of a correspondence between a PSFCH frequency domain resource set and a subchannel according to an embodiment of this application;

FIG. 18 is a diagram of a correspondence between a PSFCH frequency domain resource set and a subchannel according to an embodiment of this application;

FIG. 19A is a diagram of a correspondence between a PSFCH frequency domain resource set and a subchannel according to an embodiment of this application;

FIG. 19B is a diagram of a resource correspondence according to an embodiment of this application;

FIG. 20 is a diagram of a structure of a communication apparatus according to an embodiment of this application;

FIG. 21 is a diagram of a structure of a communication apparatus according to an embodiment of this application; and

FIG. 22 is a diagram of a structure of a communication apparatus according to an embodiment of this application.

## DESCRIPTION OF EMBODIMENTS

The technical solutions provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. The communication method provided in embodiments of this application may be further applied to fields such as vehicle-to-everything (vehicle-to-everything, V2X) communication, the internet of vehicles, autonomous driving, and assisted driving.

Particularly, the technical solutions in embodiments of this application may be further applied to fields such as vehicle-to-everything (vehicle-to-everything, V2X) communication, cellular vehicle-to-everything (cellular vehicle-to-everything, C-V2X) communication, the internet of vehicles, autonomous driving, and assisted driving. C-V2X is a V2X communication technology developed based on a cellular system, and uses and enhances a current cellular network function and element, to implement low-delay and high-reliability communication between various nodes in a vehicle network, including vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication. With evolution of the cellular system from 4G LTE to 5G NR, C-V2X also evolves from LTE-V2X to NR-V2X.

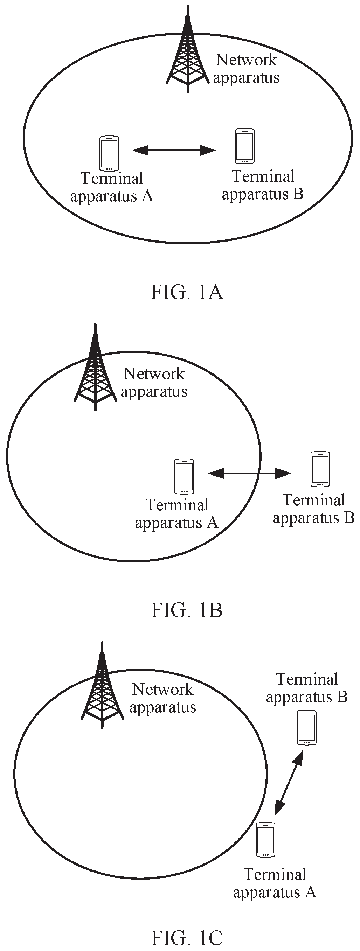

For ease of understanding embodiments of this application, communication systems shown in **FIG. 1A to FIG. 1C** are first used as an example to describe in detail a communication system applicable to embodiments of this application. This application is applicable to a communication system that supports sidelink communication, and supports a communication scenario with network coverage and a communication scenario without network coverage. A sidelink may also be referred to as a sidelink, and is referred to as a sidelink in this application.

As shown in FIG. 1A to FIG. 1C, the communication systems each may include a plurality of terminal apparatuses (for example, a terminal apparatus A and a terminal apparatus B), and optionally, further include a network apparatus. In FIG. 1A, both the terminal apparatus A and the terminal apparatus B are in signal coverage of the network apparatus. In FIG. 1B, the terminal apparatus A is in signal coverage of the network apparatus, but the terminal apparatus B is outside signal coverage of the network apparatus. In FIG. 1C, both the terminal apparatus A and the terminal apparatus B are outside signal coverage of the network apparatus. The terminal apparatus A and the terminal apparatus B in FIG. 1A and FIG. 1B may communicate with each other through the sidelink by using a resource scheduled by the network apparatus, and the resource may be a licensed resource or a licensed frequency band. Alternatively, the terminal apparatus A and the terminal apparatus B may perform resource self-selection, that is, select, from a resource pool, a resource used for sidelink communication, and the resource is an unlicensed resource or an unlicensed frequency band. Both the terminal apparatus A and the terminal apparatus B in FIG. 1C are outside signal coverage of the network apparatus, and therefore can communicate with each other only through the sidelink in a resource self-selection manner.

The following separately describes the network apparatus and the terminal apparatus in FIG. 1A to FIG. 1C.

**(1) Network device**

In embodiments of this application, a network device may be a device in a wireless network, and the network device may also be referred to as a network apparatus. For example, the network device may be a radio access network (radio access network, RAN) node that connects the terminal device to the wireless network, and may also be referred to as an access network device. The network device includes but is not limited to: a base station (base station), an evolved base station (evolved NodeB, eNodeB), a transmission and reception point (transmission and reception point, TRP), a next generation base station (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used for the network device are not limited in this application.

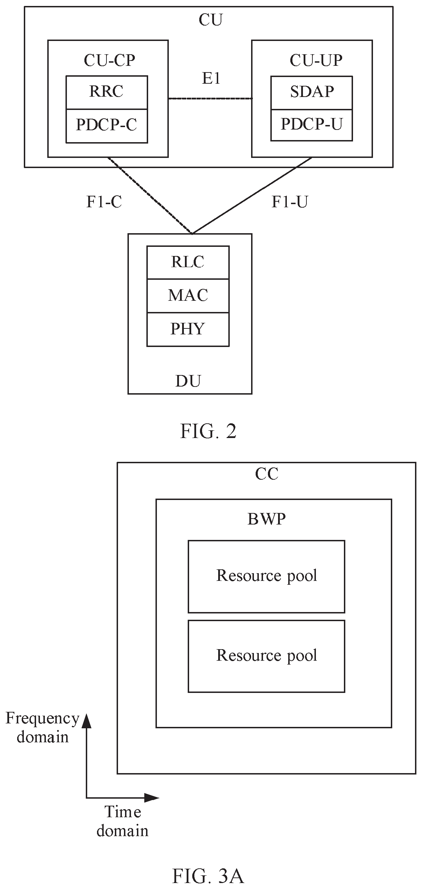

In some deployments, the network device may include a central unit (central unit, CU) and a distributed unit (distributed unit, DU). An RAN device including a CU node and a DU node splits protocol layers of a gNB in an NR system. Functions of a part of the protocol layers are centrally controlled by the CU, and functions of a part or all of the remaining protocol layers are distributed in the DU, and the CU centrally controls the DU, as shown in FIG. 2. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). It is clear that, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements a part of functions of the gNB, and the DU implements a part of functions of the gNB. For example, the CU is responsible for processing a non-real-time protocol and service, to implement functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

### (2) Terminal device

A terminal device in embodiments of this application may be a wireless terminal apparatus that can receive scheduling and indication information from a network apparatus. The terminal device may be referred to as a terminal apparatus, and may also be referred to as user equipment (user equipment, UE), a mobile station (mobile station, MS), a mobile terminal (mobile terminal, MT), or the like. The terminal apparatus may be a device that includes a wireless communication function (providing voice/data connectivity to a user), for example, a handheld device, a vehicle-mounted device, or a vehicle-mounted module that has a wireless connection function. Currently, some examples of the terminal apparatus are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal apparatus, a vehicle-to-everything (vehicle-to-everything, V2X) communication terminal apparatus, an intelligent vehicle, a telematics box (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). The terminal device may alternatively be a device in device-to-device (device to device, D2D) communication, for example, an electricity meter or a water meter. In addition, in embodiments of this application, the terminal device may alternatively be a terminal device in an IoT system. IoT is an important part of future information technology development. A main technical feature of the IoT is to connect things to a network by using a communication technology, to implement an intelligent network for human-machine interconnection and interconnection between things.

In this application, predefined content is usually defined in a standard, does not need to be configured by another device, and is information recorded/written in advance in hardware and/or software of the terminal apparatus, or may be understood as information that cannot be changed by the network apparatus or another terminal apparatus. Preconfigured content is usually information recorded/written in advance in hardware and/or software of the terminal apparatus, is determined by a factory device vendor, and may be changed by software or hardware.

A (pre)configuration may be classified into a network apparatus (pre)configuration and a terminal apparatus (pre)configuration. If a (pre)configuration is a network apparatus (pre)configuration, the (pre)configuration may be performed based on a system information block (system information block, SIB) or RRC signaling. If a (pre)configuration is a terminal apparatus (pre)configuration, the (pre)configuration may be performed based on PC5-RRC signaling.

The communication system and the scenario described in embodiments of this application are intended to describe the technical solutions in embodiments of this application more clearly, and do not constitute a limitation on the technical solutions provided in embodiments of this application. A person of ordinary skill in the art may know that: With evolution of a network architecture and emergence of a new scenario, the technical solutions provided in embodiments of this application are also applicable to similar technical problems.

The following first explains and describes related terms in embodiments of this application. Unless otherwise specified, these explanations are intended to support meanings of related terms, for ease of understanding of embodiments of this application, and should not be considered as a strict limitation on related terms in the protection scope claimed in this application.

**(1) Sidelink communication**

A time-frequency resource for sidelink communication is configured by using a sidelink resource pool, and the sidelink resource pool may also be referred to as a resource pool (resource pool) for short. The resource pool may be considered as a set of time domain resources and frequency domain resources used for sidelink communication. The resource pool may be located on a carrier, or may be located on a bandwidth part (bandwidth part, BWP) of a carrier. For example, one or more resource pools may be configured on one carrier (or a BWP of one carrier).

For example, as shown in FIG. 3A, a relationship between a component carrier (component carrier, CC), a BWP, and an RP is provided. One CC includes one BWP, and one BWP may include at least one RP. In the figure, two resource pools are used as an example, and a quantity of resource pools is not limited.

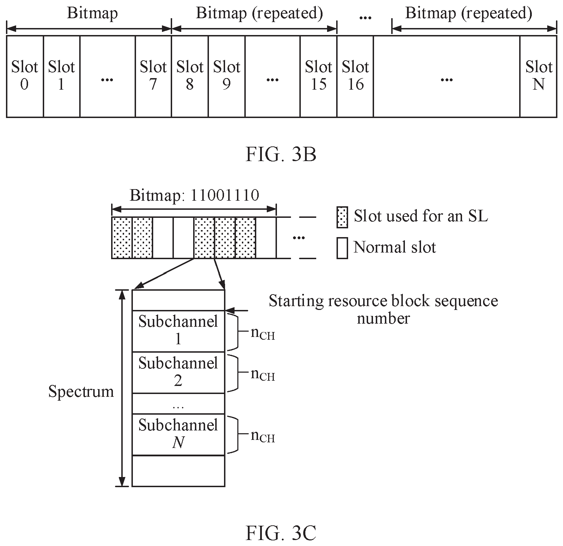

The time domain resource used for sidelink communication in the resource pool may be determined by a sidelink terminal based on a bitmap (bitmap), and a length of the bitmap is configured by a higher layer. As shown in **FIG. 3B**, an example (a length of the bitmap is 8 bits) is provided. One bit corresponds to one slot, each slot includes M=14 symbols, and the M symbols are one time domain transmission unit. When a sidelink communication resource is scheduled, scheduling in time domain may be performed at a granularity of slot.

For the frequency domain resource for sidelink communication, a network apparatus divides a frequency band used for sidelink communication into several subchannels, and each subchannel includes a specific quantity of resource blocks (resource blocks, RBs). **FIG. 3C** is a diagram of the frequency domain resource in the resource pool. The network apparatus indicates a sequence number of a $1^{st}$ resource block of a frequency domain resource used for sidelink communication, a total quantity $N$ of subchannels included in the resource pool, and a quantity $n_{CH}$ of RBs included in each subchannel. One sidelink transmission may occupy one or more subchannels. When a sidelink communication resource is scheduled, scheduling in frequency domain is performed at a granularity of subchannel.

In addition, in sidelink communication, a terminal apparatus may transmit sidelink data through a physical sidelink shared channel (physical sidelink shared channel, PSSCH) and/or a physical layer sidelink control channel (physical sidelink control channel, PSCCH). A meaning of the sidelink data is not limited in this application.

**(2) Carrier aggregation**

Carrier aggregation is a technology that integrates intra-band or inter-band radio channel resources to increase a data transmission rate of a user and reduce a delay. To provide a higher service rate, the carrier aggregation is introduced in 3GPP Release 10. A plurality of contiguous or non-contiguous component carriers (component carriers, CCs) are aggregated to form a larger bandwidth (up to 100 MHz), to meet a 3GPP requirement. Based on frequency bands of aggregated carriers, the CA is classified into intra-band carrier aggregation (intra-band CA) and inter-band carrier aggregation (inter-band CA). The intra-band carrier aggregation is classified into intra-band contiguous carrier aggregation and intra-band non-contiguous carrier aggregation.

For sidelink communication, the carrier aggregation technology is supported in an LTE-V2X phase. For example, a network apparatus may configure one or more resource pools on each of three carriers, and indicate that the three carriers can be aggregated. Further, a terminal apparatus may simultaneously receive sidelink data from one or more other terminal apparatuses on the three carriers or less than three carriers, or may simultaneously send sidelink data to one or more other terminal apparatuses on the three carriers or less than three carriers.

**(3) Sidelink feedback information**

In embodiments of this application, sidelink feedback information may also be referred to as side feedback data. The sidelink feedback information may include at least one of HARQ-ACK information (for example, ACK/NACK information), conflict information (for example, a scheme 2 conflict indication), a channel state information reference signal (channel state information reference signal, CSI-RS) report, and a beam measurement information report. Specific content included in the side feedback data is not limited in embodiments of this application.

HARQ-ACK feedback means that after a transmit end sends data to a receive end, the receive end may send corresponding feedback information, for example, ACK/negative acknowledgment (negative acknowledgment, NACK) information, to the transmit end based on a decoding result of the data, to improve reliability of data transmission. For sidelink communication, the HARQ-ACK feedback is supported in an NR-V2X phase. To be specific, for one PSCCH/PSSCH transmission (a PSSCH is used as an example herein), the receive end needs to transmit/send corresponding sidelink feedback data based on a current decoding result of sidelink data.

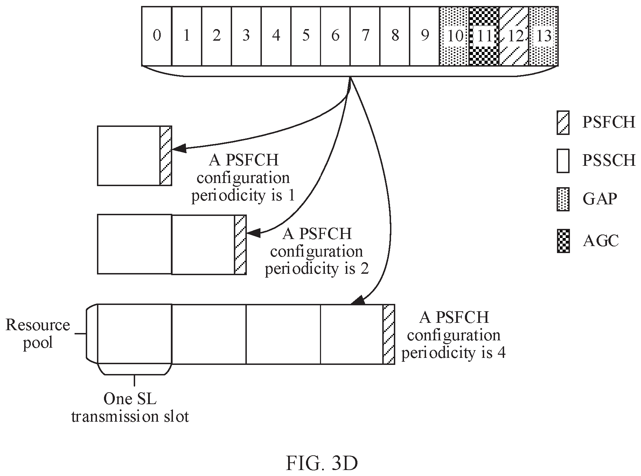

The sidelink feedback data may be transmitted through a physical sidelink feedback channel (physical sidelink feedback channel, PSFCH). A PSFCH resource is a periodic resource configured in a resource pool, and a periodicity configuration parameter $N_{\mathrm{PSSCH}}^{\mathrm{PSFCH}}$ (that is, a PSFCH configuration periodicity) of the PSFCH resource may be 0, 1, 2, or 4. The PSFCH resource includes a time domain resource and a frequency domain resource. $N_{\mathrm{PSSCH}}^{\mathrm{PSFCH}} = 0$ indicates that there is no PSFCH resource configuration in the resource pool, that is, PSFCH sending is not enabled in the resource, that is, feedback of a physical layer HARQ and the like is not supported. $N_{\mathrm{PSSCH}}^{\mathrm{PSFCH}} = 1,2,4$ indicates that there is one feedback slot in every $N_{\mathrm{PSSCH}}^{\mathrm{PSFCH}}$ sidelink transmission slots in one resource pool, and the feedback slot is a slot in which the PSFCH resource is located. As shown in **FIG. 3D,** in the feedback slot, the PSFCH occupies last three symbols including a gap (GAP), and the symbols are specifically automatic gain control (automatic gain control, AGC)+PSFCH+GAP. The slot in which the PSFCH resource is located may also be referred to as a PSFCH slot.

In NR-V2X, the PSFCH resource is configured for each PSSCH subchannel. A specific process of determining the PSFCH resource corresponding to each subchannel is as follows:

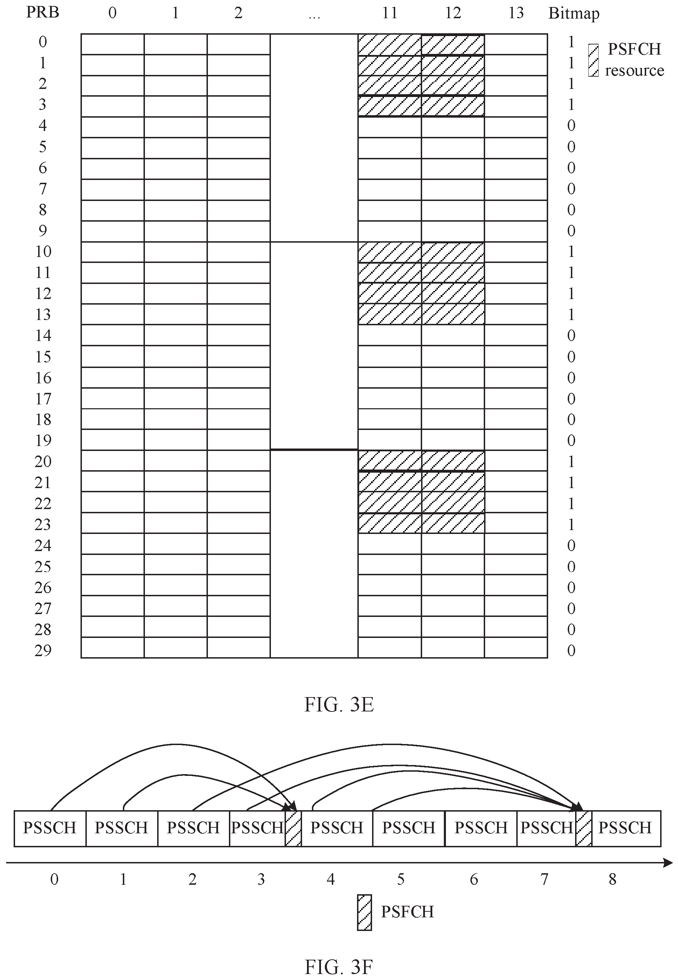

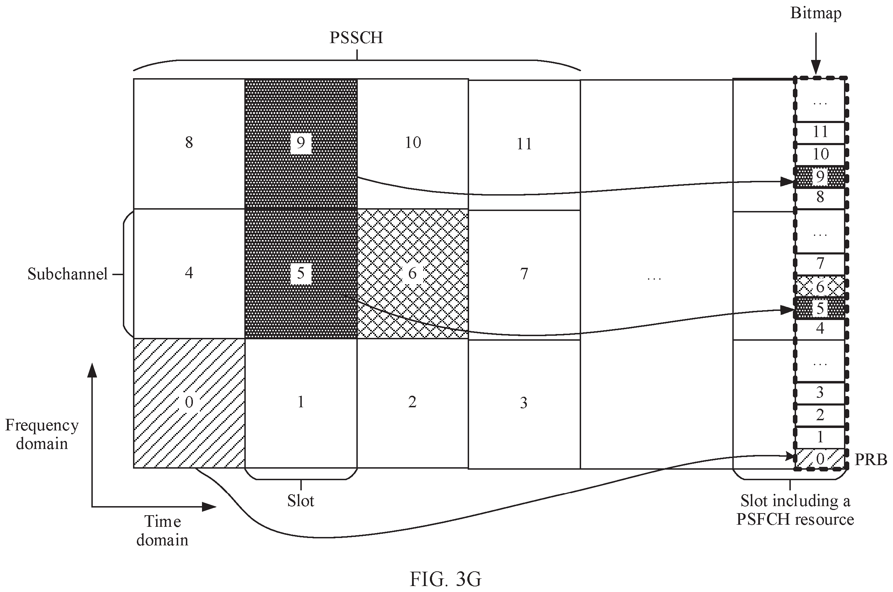

① A bitmap (bitmap) of a PSFCH frequency domain resource is configured in the resource pool, to indicate whether a physical resource block (physical resource block, PRB) on a frequency domain resource in which the resource pool is located can be used as the PSFCH frequency domain resource. To be specific, a length of bit information included in the bitmap is equal to a quantity of PRBs in the resource pool. 1 in the bitmap indicates that a corresponding PRB can be used as the PSFCH frequency domain resource, and 0 in the bitmap indicates that a corresponding PRB cannot be used as the PSFCH frequency domain resource. Particularly, the PSFCH frequency domain resource may be used to transmit the HARQ-ACK information, and a resource of the PSFCH frequency domain resource is represented by an "sl-PSFCH-RB-Set" bitmap. A bit value 1 in the bitmap indicates that a corresponding PRB may be used to transmit the HAQR-ACK information. Alternatively, the PSFCH frequency domain resource may be used to transmit the scheme 2 conflict indication, and a resource of the PSFCH frequency domain resource is represented by using an "sl-RB-SetPSFCH" bitmap. 1 in the bitmap indicates that a corresponding PRB may be used to transmit the scheme 2 conflict indication. A position of the bit value 1 in "sl-PSFCH-RB-Set" and a position of the bit value 1 in "sl-RB-SetPSFCH" do not overlap.
As shown in **FIG. 3E,** in a feedback slot having the PSFCH frequency domain resource, it is assumed that one subchannel includes 10 PRBs, and the resource pool includes three subchannels in total. In this case, the bitmap indicating the PSFCH frequency domain resource in the resource pool includes 3 * 10=30 bits in total, to indicate whether each PRB can be used for PSFCH transmission. Refer to **FIG. 3E.** A frequency domain location corresponding to the bit value 1 in the bitmap may be used for PSFCH transmission, for example, the HARQ-ACK information or the conflict information. FIG. 3E is shown by using an example in which first four PRBs of each subchannel may be used for PSFCH transmission.
② It is considered that a decoding capability of the receive end is limited. The receive end cannot immediately perform feedback after receiving the sidelink data. Therefore, a PSSCH feedback time interval $K$ is defined in the standard. To be specific, for the PSSCH, PSFCH transmission is performed in a 1st available slot including the PSFCH resource. The slot is a $K$th slot after the slot in which the PSSCH is located (that is, there is an interval of K-1 slots between the slot and the slot in which the PSSCH is located), and a value of $K$ is configured by the resource pool. As shown in **FIG. 3F,** when $K = 2$, PSSCHs carried in slots 0 and 1 may be fed back on a PSFCH resource in a slot 3, and PSSCHs carried in slots 2, 3, 4, and 5 may be fed back on a PSFCH resource in a slot 7. Because the slots 2, 3, 4, and 5 are fed back on the PSFCH resource in the same slot, the slots 2, 3, 4, and 5 may be referred to as a PSSCH bundling window length or a feedback periodicity.
③ Available PSFCH resources in one feedback slot are sequentially allocated to each subchannel in the feedback periodicity in a manner of time domain first and then frequency domain. For example, as shown in FIG. 3G, a large grid occupies one slot in time domain, and occupies one subchannel in frequency domain. When $N_{\mathrm{PSSCH}}^{\mathrm{PSFCH}} = 4$, it indicates a PSFCH resource corresponding to each subchannel in four slots associated with a same PSFCH slot. If the PSSCH occupies two subchannels for transmission, for example, PSSCH resources occupy 5 and 9, PSFCH resources corresponding to the PSSCH resources are also 5 and 9 respectively, and are non-contiguous in frequency domain.

In other words, a correspondence between the PSSCH resource (carrying the sidelink data, which may also be referred to as a sidelink resource) and the PSFCH resource (carrying the sidelink feedback data) is defined in NR-V2X in the resource pool. The PSSCH resource and the corresponding PSFCH resource are located in a same resource pool, or the sidelink data and the sidelink feedback data corresponding to the sidelink data are located in a same resource pool.

It can be learned from the descriptions of the foregoing related technical features that, the correspondence between the PSSCH resource and the PSFCH resource in the same resource pool is defined in NR-V2X. For example, a PSSCH resource 1 corresponds to a PSFCH resource 1. If receiving, on the PSSCH resource 1, sidelink data from a terminal apparatus B, a terminal apparatus A may send sidelink feedback data corresponding to the sidelink data to the terminal apparatus B on the PSFCH resource 1.

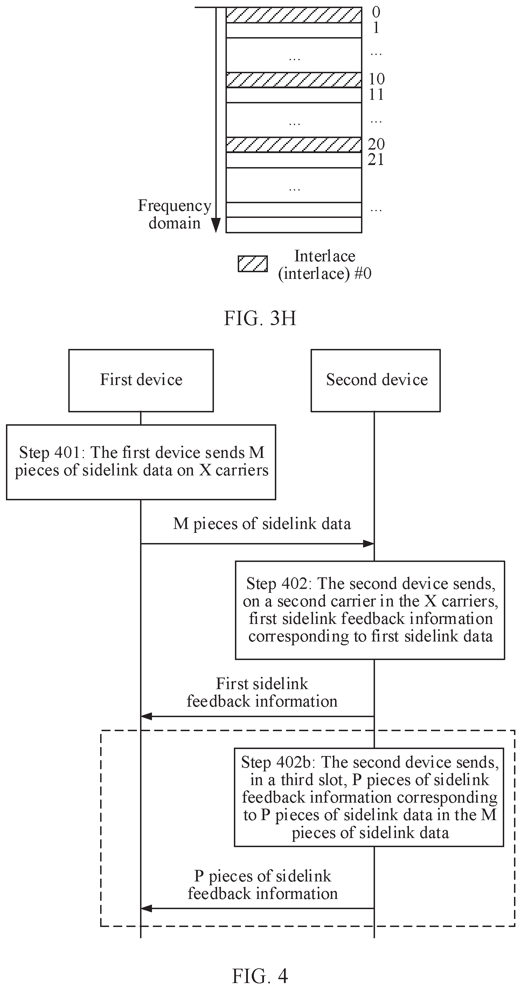

Currently, resource blocks (resource blocks, RBs) in the resource pool may be divided into a plurality of subsets in an interlaced (interlaced) manner. For example, as shown in FIG. 3H, that interlace $m \in \{0, 1, ..., M-1\}$ includes a plurality of RBs whose indexes are $\{m, M+m, 2M+m, 3M+m, ...\}$ is defined. When a subcarrier spacing of the resource pool is 15 kHz, M=10; or when a subcarrier spacing of the resource pool is 30 kHz, M=5. As shown in FIG. 3H, each grid represents one RB. For the subcarrier spacing of 15 kHz, there are 10 interlaces. For an interlace whose index is #0, there are 10 RBs whose indexes are $\{0, 10, 20, 30, ..., 90\}$. Other cases are deduced by analogy. Details are not described again.

To improve a data transmission rate of a sidelink, a carrier aggregation technology is currently considered to be used in NR-V2X. However, after the carrier aggregation is introduced in NR-V2X, there is currently no corresponding solution for how a terminal apparatus performs sidelink feedback. Based on this, related implementation of sidelink feedback in a carrier aggregation scenario is studied in embodiments of this application. For example, embodiments of this application provide a method, to implement cross-carrier sidelink feedback in the carrier aggregation scenario.

When the method provided in this application is applied to the systems in FIG. 1A to FIG. 1C, the terminal device or the module in the terminal device in FIG. 1A to FIG. 1C may implement the method performed by the first device or the second device in embodiments of this application, and the network device or the module in the network device in FIG. 1A to FIG. 1C may implement the method performed by the first device or the second device in embodiments of this application.

It may be understood that a specific structure of an execution body of the method provided in embodiments of this application is not particularly limited in this application. The method performed by the terminal device may be applied to the terminal device or the module in the terminal device, and the method performed by the network device may be applied to the network device or the module in the network device, provided that a program that records code of the method provided in embodiments of this application can be run to perform communication according to the method provided in embodiments of this application.

FIG. 4 is a schematic flowchart of a data transmission method according to an embodiment of this application. The method includes the following steps.

Step 401: A first device sends M pieces of sidelink data on X carriers.

Correspondingly, a second device receives the M pieces of sidelink data on the X carriers.

The M pieces of sidelink data include first sidelink data, the X carriers include a first carrier, the first sidelink data is located on the first carrier, that is, a first sidelink resource that carries the first sidelink data is located on the first carrier, where X is an integer greater than 0. The first device may be a terminal device or a module or a chip in a terminal device, and the second device may be a terminal device or a module or a chip in a terminal device.

In this application, the sidelink data may also be replaced with a transport block (transport block, TB), and the first device encapsulates the sidelink data into the TB for transmission. When feeding back the sidelink data, a receive end may feed back the sidelink data at a granularity of TB, that is, one TB corresponds to one piece of sidelink feedback information.

The first device sends at least one piece of sidelink data on one of the X carriers, that is, M is an integer greater than or equal to X. The X carriers may be carriers after carrier aggregation, and each carrier is a component carrier in the carrier aggregation.

For example, in some possible scenarios, after receiving one piece of sidelink data, the second device may feed back the sidelink data based on a receiving result (for example, a decoding result) of the sidelink data. For details, refer to the following steps.

Step 402: The second device sends, on a second carrier in the X carriers, first sidelink feedback information corresponding to the first sidelink data.

Correspondingly, the first device receives the first sidelink feedback information on the second carrier.

The first sidelink feedback information may be at least one of HARQ-ACK information (for example, ACK/NACK information), conflict information (for example, a scheme 2 conflict indication), a channel state information reference signal, and a beam measurement information report that correspond to the first sidelink data. For example, the first sidelink feedback information is one of the four, or two of the four, or a sum of the four.

In this application, a sidelink resource on the first carrier may have a corresponding PSFCH resource on the second carrier, or may have a corresponding PSFCH resource on another carrier. The PSFCH resource is a resource used to transmit sidelink feedback information, and may also be referred to as a sidelink feedback resource. To be specific, after receiving the sidelink data on the first carrier, the second terminal device may feed back the sidelink feedback information of the sidelink data on the PSFCH resource on the second carrier or the another carrier. The first sidelink resource on which the first sidelink data is located is used as an example. The first sidelink resource corresponds to a plurality of PSFCH resources, the plurality of PSFCH resources are located on at least two carriers, a first PSFCH resource on which the first sidelink feedback information is located is one of the plurality of PSFCH resources, and the at least two carriers include the first carrier and the second carrier. In addition, in this application, the sidelink resource used to transmit the sidelink data may also be referred to as a PSCCH resource/PSSCH resource.

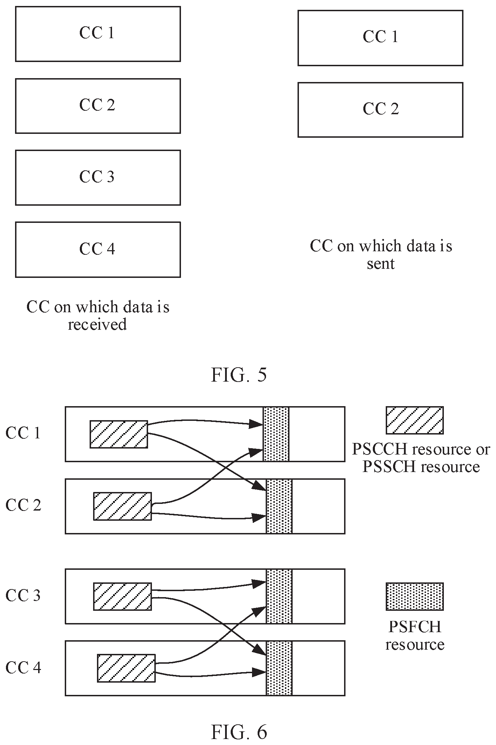

According to the foregoing procedure, this application provides a method for sending the sidelink feedback information across carriers. However, a scenario in which the second device sends the sidelink feedback information across carriers is not limited in this application. For example, in a first possible scenario, a network side does not configure the second device to send data on the first carrier, and only configures the second device to receive data on the first carrier. In this case, after the second device receives the first sidelink data on the first carrier, the second device sends, on another carrier (for example, the second carrier), the first sidelink feedback information corresponding to the first sidelink data. For example, as shown in FIG. 5, a network device configures the second device to receive data on four carriers, where the four carriers are a CC 1, a CC 2, a CC 3, and a CC 4; and the network device configures the second device to send data on two carriers, where the two carriers are a CC 1 and a CC 2. If a sidelink resource on the CC 3 has a corresponding PSFCH resource on the CC 1 or the CC 2, for data received on the CC 3, the second terminal device may send, on a PSFCH resource on the CC 1 or the CC 2, sidelink feedback information of the data received on the CC 3.

In a second possible scenario, a capability of the second device is limited.

For example, in a period of time, data can be received only on the first carrier, and data cannot be sent on the first carrier. In this case, the second device sends, on another carrier (for example, the second carrier), the first sidelink feedback information corresponding to the first sidelink data.

That the capability of the second device is limited may mean that a sending capability of the second device is less than a receiving capability. For example, a quantity of pieces of sidelink data (that is, TBs) that can be simultaneously sent by the second device is less than a quantity, supported by the second device, of pieces of sidelink data (that is, TBs) that can be received and processed or a quantity, supported by the second device, of HARQ processes that can be processed. For example, the second device can support simultaneously in receiving sidelink data on four carriers, but can support simultaneously in sending data only on two carriers. In this application, to feed back sidelink feedback information of the sidelink data on the four carriers, the second device may send sidelink feedback information of sidelink data on the other two carriers by using the two supported carriers.

That the capability of the second device is limited may also mean that a quantity of pieces of sidelink feedback information that the second device needs to feed back in one slot is less than a quantity of pieces of sidelink feedback information that can be sent by the second device in the slot (that is, a maximum quantity of pieces of sidelink feedback information that can be simultaneously sent or concurrently sent by the second device in one slot).

For example, the second device receives the first sidelink data in a first slot by using a first sidelink feedback resource. It is assumed that the second device needs to send the first sidelink feedback information in a second slot based on a PSSCH feedback time interval. If a quantity of pieces of sidelink feedback information that the second device needs to feed back on the first carrier in the second slot is less than a quantity of pieces of sidelink feedback information that can be sent by the second device on the first carrier (that is, a maximum quantity of pieces of sidelink feedback data that can be simultaneously sent or concurrently sent by the second device on the first carrier), the second device may send sidelink feedback information of a part of the sidelink data on the first carrier by using another carrier.

In this application, the sidelink resource on the first carrier may have a corresponding PSFCH resource on the at least two carriers. If the second terminal device feeds back, across carriers, the first sidelink feedback information corresponding to the first sidelink data on the first carrier, the second device may select one carrier from the at least two carriers as the second carrier. How the second device specifically determines the second carrier from the at least two carriers that include the corresponding PSFCH feedback resource is not limited in this application.

In a first implementation, the second device may randomly select one carrier from the at least two carriers as the second carrier.

In a second implementation, each of the at least two carriers corresponds to one priority, and the second device may use a carrier with a highest priority in carriers other than the first carrier in the at least two carriers as the second carrier. A priority of each carrier is predefined or preconfigured, or is configured by a network.

In a third implementation, the second device may use a carrier with a lowest channel busy ratio (channel busy ratio, CBR) in carriers other than the first carrier in the at least two carriers as the second carrier. For example, a channel busy ratio of the carrier may be an average value of channel busy ratios of all channels on the carrier. A specific manner of calculating the "channel busy ratio of the carrier" is not limited in embodiments of this application. For example, a manner of calculating a channel busy ratio of carrier selection (carrier selection) in LTE V2X CA may be reused.

The foregoing is merely an example. How the second device specifically determines the second carrier is not limited in this application.

According to the method provided in this application, after receiving the first sidelink data on the first carrier, the second device may send, on the second carrier, the first sidelink feedback information corresponding to the first sidelink data, so that the sidelink feedback information is sent across carriers in a carrier aggregation scenario, thereby increasing an opportunity of sending the sidelink feedback information and improving sidelink communication efficiency.

In the foregoing procedure, for other sidelink data in the M pieces of sidelink data, the second device may also send corresponding sidelink feedback information. In this case, step 402 may be further replaced with the following step: Step 402b: The second device sends, in a third slot, P pieces of sidelink feedback information corresponding to P pieces of sidelink data in the M pieces of sidelink data.

Correspondingly, the first device receives, in the third slot, the P pieces of sidelink feedback information corresponding to the P pieces of sidelink data in the M pieces of sidelink data.

The P pieces of sidelink data one-to-one correspond to the P pieces of sidelink feedback information, the P pieces of sidelink data include the first sidelink data, and the P pieces of sidelink feedback information include the first sidelink feedback information. The P pieces of sidelink feedback information are located on Y carriers, and the second device sends at least one piece of sidelink feedback information on each of the Y carriers. A first PSFCH resource on which the first sidelink feedback information is located is located on a second carrier in the Y carriers, Y is an integer greater than 0, and P is an integer less than or equal to M. The Y carriers may be a part or all of the X carriers.

It should be noted that, for the received M pieces of sidelink data, a part of the sidelink data does not need to feed back sidelink information. Therefore, P may be less than M.

Optionally, if the second device also receives sidelink data on the second carrier, the second device may also feed back corresponding sidelink feedback information. For example, if the M pieces of sidelink data include second sidelink data on the second carrier, the P pieces of sidelink feedback information may include second sidelink feedback information corresponding to the second sidelink data.

Because the P pieces of sidelink feedback information are located in a same time unit, for example, located in a same slot, or located in at least one same symbol, P is less than or equal to a quantity max of pieces of sidelink feedback information that can be sent by the second device in one slot, that is, P is less than or equal to a maximum quantity max of pieces of sidelink feedback information that can be simultaneously sent or concurrently sent by the second device.

If a quantity of pieces of sidelink feedback information that the second device actually needs to send in the third slot is greater than the maximum quantity max of pieces of sidelink feedback information that can be simultaneously sent or concurrently sent by the second device, the second device sends only a part of the sidelink feedback information. For example, the second device actually needs to send Pmax pieces of sidelink feedback information in the third slot, but Pmax is greater than max. In this case, the second device sends only P=max (in this case, it is assumed that P=max) pieces of sidelink feedback information in the Pmax pieces of sidelink feedback information. In addition, in this case, how the second device determines P pieces of sidelink feedback information to be sent is not limited in this application.

For example, the sidelink data may include priority information, and the priority information indicates a priority of the sidelink feedback information corresponding to the sidelink data. Further, after the sidelink data is received, the priority of the sidelink feedback information corresponding to the sidelink data may be obtained. A lower priority value indicates a higher priority. For example, a priority 1 is higher than a priority 2, and the priority 2 is higher than a priority 3. For example, it is assumed that priorities of 10 pieces of sidelink feedback information that the second device actually needs to send are shown in Table 1.

Table 1: Example of priorities of sidelink feedback information 1 to sidelink feedback information 10

| Sidelink feedback information | Priority |
| --- | --- |
| Sidelink feedback information 1 | 1 |
| Sidelink feedback information 2 | 1 |
| Sidelink feedback information 3 | 2 |
| Sidelink feedback information 4 | 3 |
| Sidelink feedback information 5 | 1 |
| Sidelink feedback information 6 | 2 |
| Sidelink feedback information 7 | 3 |
| Sidelink feedback information 8 | 1 |
| Sidelink feedback information 9 | 3 |
| Sidelink feedback information 10 | 4 |

If the second device can send a maximum quantity of six pieces of sidelink feedback information in the third slot, the second device may send six pieces of sidelink feedback information with highest priorities. It can be learned from Table 1 that the second device may send the sidelink feedback information 1, the sidelink feedback information 2, the sidelink feedback information 5, the sidelink feedback information 18, the sidelink feedback information 3, and the sidelink feedback information 6.

For example, before sending the sidelink feedback information across carriers, the second device may further determine a carrier or a resource set on which the PSFCH resource corresponding to the first sidelink resource is located (Example 1), determine a slot in which the first PSFCH resource for transmitting the first sidelink feedback information is located (Example 2), and determine the first PSFCH resource (Example 3). The following separately describes the examples. The following Example 1 to Example 3 are three different examples, and may be separately implemented, or may be implemented together. This is not limited in this application.

Example 1: Determine the carrier or the resource set on which the PSFCH resource corresponding to the first sidelink resource is located.

In this application, there is a correspondence between a first resource set on the first carrier and at least two resource sets on the at least two carriers. Before sending the first sidelink feedback information, the second device may determine, based on the correspondence, that the first sidelink resource corresponds to a plurality of PSFCH resources in the at least two resource sets, to determine a resource set, where a PSFCH resource in the resource set is used to send the first sidelink feedback information.

The first sidelink resource is located in the first resource set, and the at least two carriers include the first carrier and the second carrier. One resource set may be one resource pool, or may be one resource block set (RB set) in the resource pool. One resource set occupies at least one subchannel.

How the second device determines the correspondence is not limited in this application.

For example, in Implementation 1, the correspondence between the first resource set and the at least two resource sets on the at least two carriers is predefined or preconfigured.

Implementation 2: The correspondence between the first resource set and the at least two resource sets on the at least two carriers is configured by the network.

For example, the second device may receive third information, where the third information indicates that there is the correspondence between the first resource set and the at least two resource sets on the at least two carriers, and the at least two carriers include the second carrier. The second device may determine the correspondence between the first resource set and the at least two resource sets based on the third information.

The third information may be independent information, or the third information may be one piece of information in SL resource pool configuration information. The SL resource pool configuration information may indicate a resource pool on the first carrier, and the resource pool is the first resource set or the first resource set is an RB set in the resource pool.

With reference to Implementation 1 and Implementation 2, for example, it is assumed that a network side configures X carriers for the second device. In this case, the following scenarios in which there is a correspondence between carriers in the X carriers can be included.

Scenario 1: There is a correspondence among all of the X carriers. It may be understood as that a sidelink resource on one of the X carriers has a corresponding PSFCH resource on each of the X carriers.

For example, the at least two carriers include all of the X carriers. If four CCs, namely, a CC 1 to a CC 4, are configured for the second device, and one resource pool is configured for each CC, a sidelink resource in a resource pool 1 on the CC 1 corresponds to a PSFCH resource in a resource pool on each of the CC 1 to the CC 4. Similarly, a sidelink resource in a resource pool 2 on the CC 2 corresponds to a PSFCH resource in a resource pool on each of the CC 1 to the CC 4, a sidelink resource in a resource pool 3 on the CC 3 corresponds to a PSFCH resource in a resource pool on each of the CC 1 to the CC 4, and a sidelink resource in a resource pool 4 on the CC 4 corresponds to a PSFCH resource in a resource pool on each of the CC 1 to the CC 4.

The CC 1 is used as an example. The second device receives sidelink data by using the sidelink resource in the resource pool 1. If a capability of the second device is limited, and sidelink feedback information cannot be sent by using the PSFCH resource in the resource pool 1, the second device may send the sidelink feedback information by using a PSFCH resource in one of the resource pool 2 to the resource pool 4.

Scenario 2: There is a correspondence between some of the X carriers. It may be understood as that a sidelink resource on one of the X carriers has a corresponding PSFCH resource on some of the X carriers.

For example, the at least two carriers include some of the X carriers. As shown in FIG. 6, if four CCs, namely, a CC 1 to a CC 4, are configured for the second device, and one resource pool is configured for each CC, a sidelink resource (a PSCCH resource or a PSSCH resource) in a resource pool 1 on the CC 1 corresponds to a PSFCH resource in a resource pool on each of the CC 1 and the CC 2. A sidelink resource in a resource pool 2 on the CC 2 corresponds to a PSFCH resource in a resource pool on each of the CC 1 and the CC 2, a sidelink resource (a PSCCH resource or a PSSCH resource) in a resource pool 3 on the CC 3 corresponds to a PSFCH resource in a resource pool on each of the CC 3 and the CC 4, and a sidelink resource (a PSCCH resource or a PSSCH resource) in a resource pool 4 on the CC 4 corresponds to a PSFCH resource in a resource pool on each of the CC 3 and the CC 4.

The CC 1 is used as an example. The second device receives sidelink data by using the sidelink resource in the resource pool 1. If a capability of the second device is limited, and sidelink feedback information cannot be sent by using the PSFCH resource in the resource pool 1, the second device may send the sidelink feedback information by using the PSFCH resource in the resource pool 2.

Scenario 2 may also be understood as that the X carriers are divided into a plurality of carrier bundles (bundles), a plurality of carriers in the X carriers form one carrier bundle (bundle), and sidelink data between the carrier bundles has a corresponding PSFCH resource on another carrier; or that X resource sets included in the X carriers are divided into a plurality of resource sets bundles, a plurality of resource sets in the X resource sets form one resource set bundle, sidelink data between the resource sets bundles has a corresponding PSFCH resource on another resource set, and these resource sets are located on different carriers.

For example, with reference to FIG. 6, the resource pool 1 on the CC 1 and the resource pool 2 on the CC 2 form a resource set bundle 1, and the resource pool 3 on the CC 3 and the resource pool 4 on the CC 4 form a resource set bundle 2. Data in the resource pool on the CC 1 has feedback information in a resource pool on the CC 2. Similarly, data in the resource pool on the CC 2 also has a feedback resource in a resource pool on the CC 1.

Similarly, the CC 1 is used as an example. The second device receives sidelink data by using the sidelink resource in the resource pool 1. If a capability of the second device is limited, and sidelink feedback information cannot be sent by using the PSFCH resource in the resource pool 1, the second device may send the sidelink feedback information by using the PSFCH resource in the resource pool 2.

In this application, for cross-carrier feedback, sidelink resources on different carriers correspond to orthogonal PSFCH resources on a same carrier. For example, the plurality of PSFCH resources corresponding to the first sidelink resource include a PSFCH resource on the first carrier. If a second sidelink resource on the second carrier also corresponds to at least one PSFCH resource on the first carrier, the PSFCH resource that corresponds to the first sidelink resource and that is on the first carrier is orthogonal to a PSFCH resource that corresponds to the second sidelink resource and that is on the first carrier.

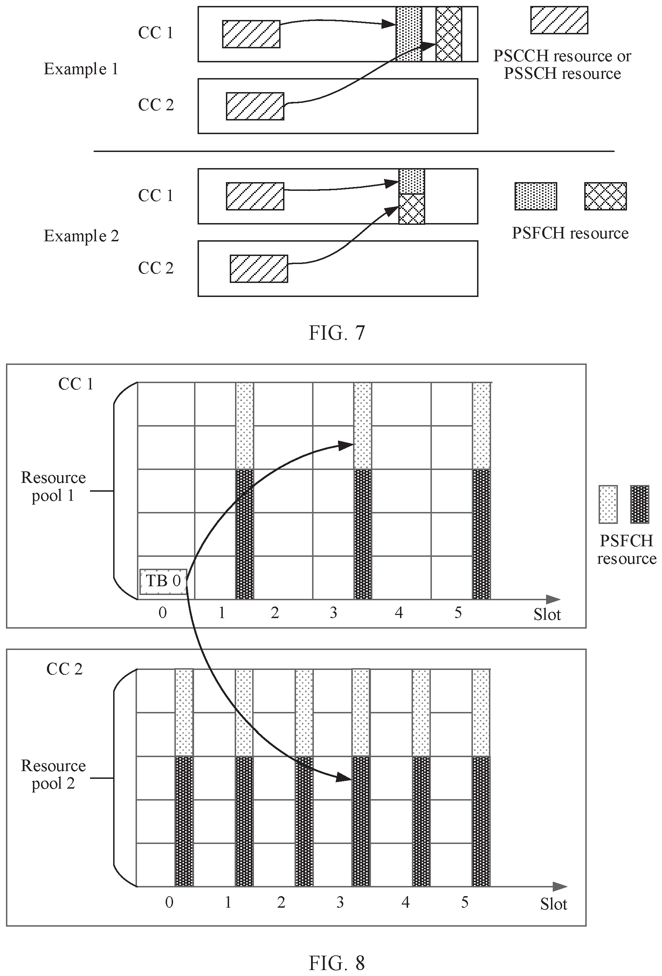

For example, as shown in FIG. 7, in Example 1 of orthogonal PSFCH resources, the PSFCH resource that corresponds to the sidelink resource on the CC 2 and that is on the CC 1 and the PSFCH resource that corresponds to the sidelink resource on the CC 1 and that is on the CC 1 are time-division multiplexed, for example, located in different slots or different symbols.

In Example 2 of orthogonal PSFCH resources, the PSFCH resource that corresponds to the sidelink resource on the CC 2 and that is on the CC 1 and the PSFCH resource that corresponds to the sidelink resource on the CC 1 and that is on the CC 1 are frequency-division multiplexed or code-division multiplexed, that is, located in a same slot, but include different frequency domains/code domains.

In the foregoing procedure, a correspondence between resource sets on carriers is established, so that a sidelink resource in one resource set is associated with PSFCH resources in a plurality of resource sets. In this way, when cross-carrier sidelink feedback information transmission needs to be performed for one carrier, a PSFCH resource required for transmitting the sidelink feedback information can be obtained from another carrier, thereby increasing an opportunity of transmitting the sidelink feedback information.

Example 2: Determine the slot in which the first PSFCH resource for transmitting the first sidelink feedback information is located.

Because the PSFCH resource is usually periodic, on one carrier, there is one PSFCH slot at an interval of a plurality of slots, and therefore there may be a plurality of implementations in which the first sidelink feedback information is specifically sent in a slot. Before a specific implementation is described, the following concepts are first defined:

a first resource set, where the first sidelink resource belongs to the first resource set, and the first resource set is located on the first carrier;
a second resource set, where the first PSFCH resource belongs to the second resource set, and the second resource set is located on the second carrier;
a first slot, where the first sidelink resource is located in the first slot;
a second slot, where a PSFCH resource in the plurality of PSFCH resources that belongs to the first resource set corresponding to the first sidelink resource is located in the second slot; and
a third slot, where a PSFCH resource in the plurality of PSFCH resources that belongs to the second resource set corresponding to the first sidelink resource is located in the third slot.

Implementation 1: The third slot is determined based on the second slot.

In Implementation 1, the second slot may be determined based on the first slot and first duration, and then the second slot is used as the third slot. It may be understood that an index of the second slot is the same as an index of the third slot, that is, the second slot and the third slot are a same slot. The first duration is (pre)configured or predefined, or may be configured by the network side.

In this application, how to specifically determine the second slot based on the first slot and the first duration is not limited. For example, the second slot is a 1st PSFCH slot that has a difference of at least first duration after the first slot. Because the sidelink feedback information is sent after the sidelink data, the second slot or the third slot is after the first slot.

For example, the first duration may be determined based on a PSSCH feedback time interval K1 of the second device in the first resource set. A value of K1 may be (pre)configured or predefined, or may be configured based on resource pool configuration information corresponding to a first resource pool to which the first resource set belongs.

For example, K1=2, and the first duration may be a duration corresponding to K1-1=1 slot. In this case, there is an interval of one slot between the second slot and the first slot. In other words, the second slot is a $(K1=2)^{nd}$ slot after the first slot.

Implementation 1 is applicable to a scenario in which a periodicity of a PSFCH slot in the first resource set is greater than or equal to a periodicity of a PSFCH slot in the second resource set.

For example, an example in which the resource set is a resource pool is used for description. As shown in FIG. 8, two carriers are a CC 1 and a CC 2. The CC 1 includes a resource pool 1, the CC 2 includes a resource pool 2, and the resource pool 1 and the resource pool 2 are a resource pool bundle. A periodicity of a PSFCH slot in the resource pool 1 is two slots, and indexes of PSFCH slots of PSFCH resources in the resource pool 1 are 1, 3, 5, 7, ... A periodicity of a PSFCH slot in the resource pool 2 is one slot, and indexes of PSFCH slots of PSFCH resources in the resource pool 2 are 0, 1, 2, 3, 4, 5, ... The PSSCH feedback time interval K1 of the second device in the first resource set is equal to 2, and the first duration is equal to K1-1=1 slot. An area filled with a pattern in the figure represents the PSFCH resource.

In a slot 0, the second device receives sidelink data TB 0 in the resource pool 1.

For the TB 0, if the second device feeds back, on the CC 1, sidelink feedback information corresponding to the TB 0, an index of the second slot determined by the second device based on the first duration is 3. The second device may send, in a slot 3 by using the PSFCH resource in the resource pool 1, the sidelink feedback information corresponding to the TB 0. That is because, in the resource pool 1 on the CC 1, after the slot 0, a 1st PSFCH slot whose interval with the slot 0 is greater than or equal to one slot and that includes the PSFCH resource is the slot 3.

If the second device feeds back, on the CC 2, the sidelink feedback information corresponding to the TB 0, the slot 3 may be used as the third slot, that is, the sidelink feedback information corresponding to the TB 0 is sent in the slot 3 by using the PSFCH resource in the resource pool 2.

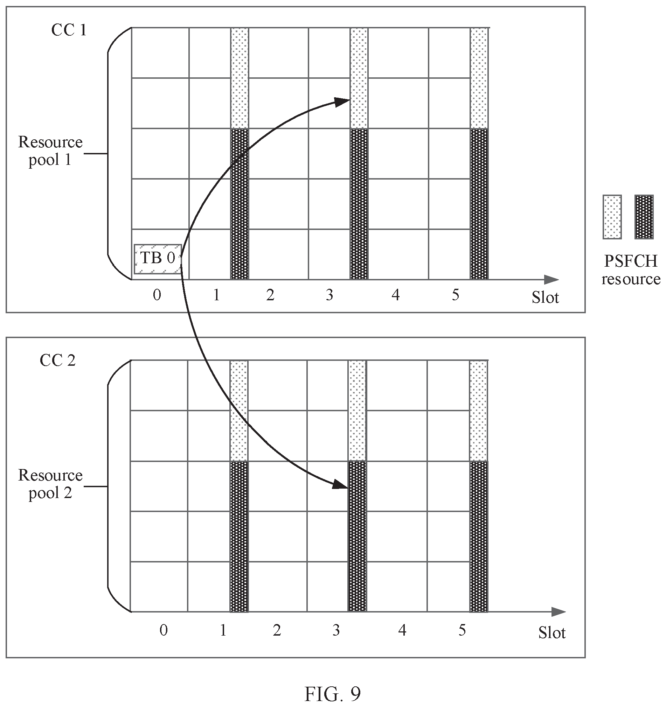

For another example, an example in which the resource set is a resource pool is used for description. As shown in FIG. 9, two carriers are a CC 1 and a CC 2. The CC 1 includes a resource pool 1, the CC 2 includes a resource pool 2, and the resource pool 1 and the resource pool 2 are a resource pool bundle. A periodicity of a PSFCH slot in the resource pool 1 is two slots, and indexes of PSFCH slots of PSFCH resources in the resource pool 1 are 1, 3, 5, 7, ... A periodicity of a PSFCH slot in the resource pool 2 is two slots, and indexes of PSFCH slots of PSFCH resources in the resource pool 2 are 1, 3, 5, 7, ... The PSSCH feedback time interval K1 of the second device in the first resource set is equal to 2, and the first duration is equal to K1-1=1 slot. An area filled with a pattern in the figure represents the PSFCH resource.

In a slot 0, the second device receives sidelink data TB 0 in the resource pool 1.

For the TB 0, an index of the second slot determined by the second device based on the first duration is 3. If the second device feeds back, on the CC 1, sidelink feedback information corresponding to the TB 0, the sidelink feedback information corresponding to the TB 0 is sent in a slot 3 by using the PSFCH resource in the resource pool 1. Similarly, if the second device feeds back, on the CC 2, the sidelink feedback information corresponding to the TB 0, the slot 3 may be used as the third slot, that is, the sidelink feedback information corresponding to the TB 0 is sent in the slot 3 by using the PSFCH resource in the resource pool 2.

In Implementation 1, when cross-carrier sidelink feedback information transmission is performed, on the second carrier, for the sidelink data on the first carrier, a slot in which the sidelink feedback information is sent on the second carrier is still the same as a slot in which the sidelink feedback information is sent on the first carrier. That is, the second slot and the third slot are a same slot, so that PSFCH slots used to feed back the first sidelink data on the first carrier and the second carrier can be aligned. Therefore, an existing resource selection time sequence relationship is not changed even if cross-carrier feedback is performed, a resource selection process is not affected, and system compatibility is improved.

Implementation 2: The third slot is determined based on the first slot and first duration.

In Implementation 2, it may be considered that the third slot is a 1st PSFCH slot that meets the first duration with the first slot. Specifically, a 1st slot whose interval with the first slot is greater than or equal to the first duration and that includes the PSFCH resource belonging to the second resource set is used as the third slot.

In this implementation, the third slot may be the same as or different from the second slot.

Implementation 2 is applicable to a scenario in which a periodicity of a PSFCH slot in the first resource set is greater than or equal to a periodicity of a PSFCH slot in the second resource set; and is also applicable to a scenario in which a periodicity of a PSFCH slot in the first resource set is less than a periodicity of a PSFCH slot in the second resource set.

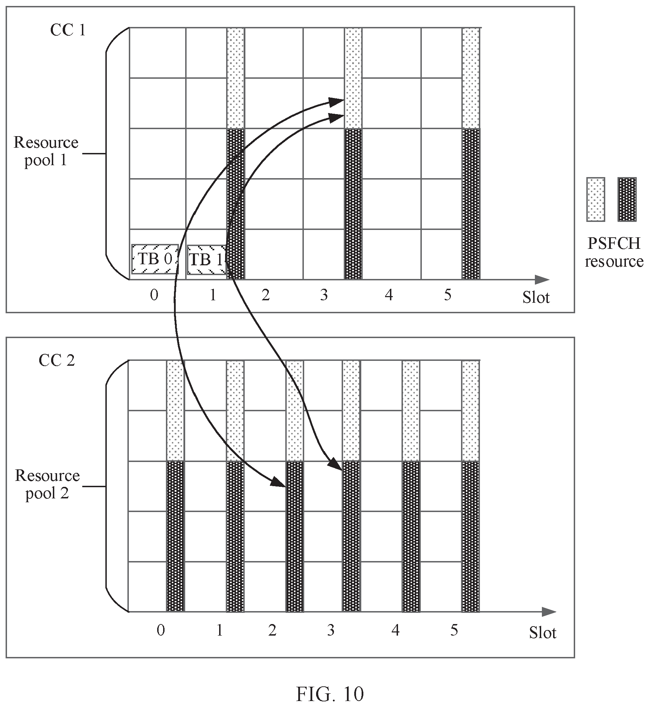

For example, an example in which the resource set is a resource pool is used for description. As shown in FIG. 10, two carriers are a CC 1 and a CC 2. The CC 1 includes a resource pool 1, the CC 2 includes a resource pool 2, and the resource pool 1 and the resource pool 2 are a resource pool bundle. A periodicity of a PSFCH slot in the resource pool 1 is two slots, and indexes of PSFCH slots of PSFCH resources in the resource pool 1 are 1, 3, 5, 7, ... A periodicity of a PSFCH slot in the resource pool 2 is one slot, and indexes of PSFCH slots of PSFCH resources in the resource pool 2 are 0, 1, 2, 3, 4, 5, ... The PSSCH feedback time interval K1 of the second device in the first resource set is equal to 2, and the first duration is equal to K1-1=1 slot. An area filled with a pattern in the figure represents the PSFCH resource.

In a slot 0, the second device receives sidelink data TB 0 in the resource pool 1; and in a slot 1, the second device receives sidelink data TB 1 in the resource pool 1.

For the TB 0, if sidelink feedback information corresponding to the TB 0 is sent on the PSFCH resource in the resource pool 1, it may be determined, based on the first duration, that the sidelink feedback information corresponding to the TB 0 is sent in a slot 3. If sidelink feedback information corresponding to the TB 0 is sent on the PSFCH resource in the resource pool 2, it may be determined, based on the first duration, that the sidelink feedback information corresponding to the TB 0 is sent in a slot 2. That is because, in the resource pool 1, after the slot 0, a 1st PSFCH slot whose interval with the slot 0 is greater than or equal to one slot and that includes the PSFCH resource is the slot 3. In the resource pool 2, after the slot 0, a 1st PSFCH slot whose interval with the slot 0 is greater than or equal to one slot and that includes the PSFCH resource is the slot 2.

For the TB 1, if sidelink feedback information corresponding to the TB 1 is sent on the PSFCH resource in the resource pool 1, it may be determined, based on the first duration, that the sidelink feedback information corresponding to the TB 0 is sent in the slot 3. If sidelink feedback information corresponding to the TB 1 is sent on the PSFCH resource in the resource pool 2, it may be determined, based on the first duration, that the sidelink feedback information corresponding to the TB 1 is sent in the slot 3. That is because, in the resource pool 1, after the slot 0, a 1st PSFCH slot whose interval with the slot 0 is greater than or equal to one slot and that includes the PSFCH resource is the slot 3. In the resource pool 2, after the slot 0, a 1st PSFCH slot whose interval with the slot 0 is greater than or equal to one slot and that includes the PSFCH resource is the slot 3.

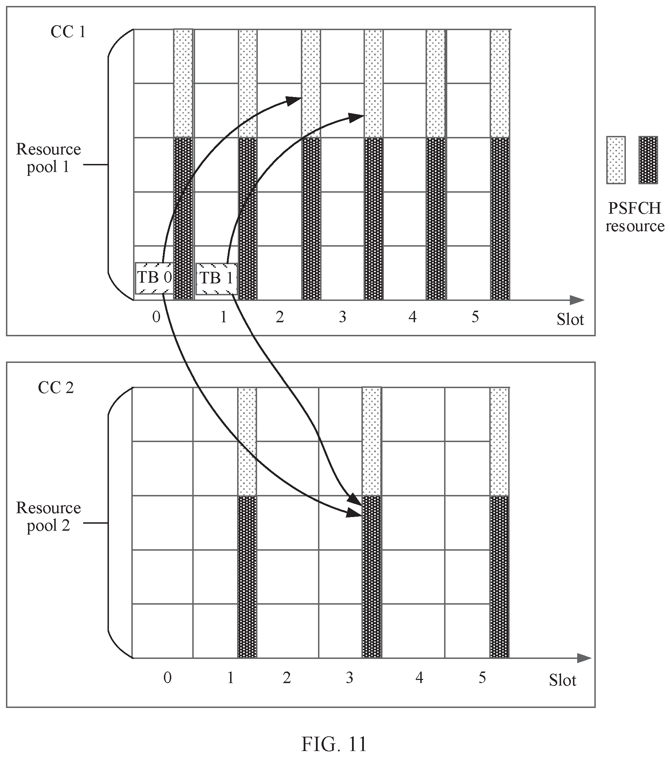

For another example, an example in which the resource set is a resource pool is used for description. As shown in FIG. 11, two carriers are a CC 1 and a CC 2. The CC 1 includes a resource pool 1, the CC 2 includes a resource pool 2, and the resource pool 1 and the resource pool 2 are a resource pool bundle. A periodicity of a PSFCH slot in the resource pool 1 is one slot, and indexes of PSFCH slots of PSFCH resources in the resource pool 1 are 0, 1, 2, 3, ... A periodicity of a PSFCH slot in the resource pool 2 is two slots, and indexes of PSFCH slots of PSFCH resources in the resource pool 2 are 1, 3, 5, 7, ... The PSSCH feedback time interval K1 of the second device in the first resource set is equal to 2, and the first duration is equal to K1-1=1 slot. An area filled with a pattern in the figure represents the PSFCH resource.

In a slot 0, the second device receives sidelink data TB 0 in the resource pool 1; and in a slot 1, the second device receives sidelink data TB 1 in the resource pool 1.

For the TB 0, if sidelink feedback information corresponding to the TB 0 is sent on the PSFCH resource in the resource pool 1, it may be determined, based on the first duration, that the sidelink feedback information corresponding to the TB 0 is sent in a slot 2. If sidelink feedback information corresponding to the TB 0 is sent on the PSFCH resource in the resource pool 2, because in the resource pool 2, after the slot 0, a 1st PSFCH slot whose interval with the slot 0 is greater than or equal to one slot and that includes the PSFCH resource is a slot 3, it may be determined, based on the first duration, that the sidelink feedback information corresponding to the TB 0 is sent in the slot 3 by using the PSFCH resource in the resource pool 2.

Similarly, for the TB 1, if sidelink feedback information corresponding to the TB 1 is sent on the PSFCH resource in the resource pool 1, it may be determined, based on the first duration, that the sidelink feedback information corresponding to the TB 1 is sent in the slot 3. If sidelink feedback information corresponding to the TB 1 is sent on the PSFCH resource in the resource pool 2, because in the resource pool 2, after the slot 0, a 1st PSFCH slot whose interval with the slot 0 is greater than or equal to one slot and that includes the PSFCH resource is the slot 3, the sidelink feedback information corresponding to the TB 1 is sent, based on the first duration, in the slot 3 by using the PSFCH resource in the resource pool 2.

In Implementation 2, when cross-carrier sidelink feedback information transmission is performed, on the second carrier, for the sidelink data on the first carrier, the third slot in which the sidelink feedback information is sent on the second carrier is still determined based on the first duration corresponding to the first carrier. However, because a periodicity of a PSFCH slot on the second carrier may be less than a periodicity of a PSFCH slot on the first carrier, the third slot may be earlier relative to the second slot, that is, time at which the sidelink feedback information is sent on the second carrier may be earlier relative to time at which the sidelink feedback information is sent on the first carrier. In this way, when cross-carrier sidelink feedback information transmission is performed, the sidelink feedback information may be sent in advance, so that a delay of the sidelink feedback information can be reduced. In addition, in this manner, PSFCH resources corresponding to sidelink data transmitted in different resource sets can be balanced, thereby improving system compatibility.

Implementation 3: The second slot is determined based on the first slot and first duration, and the third slot is determined based on the first slot and second duration.

In Implementation 3, it may be considered that the second slot is a 1st PSFCH slot that meets the first duration with the first slot, and the third slot is a 1st PSFCH slot that meets the second duration with the first slot.

Specifically, a 1st slot whose interval with the first slot is greater than or equal to the first duration and that includes the PSFCH resource belonging to the first resource set is used as the second slot. A 1st slot whose interval with the first slot is greater than or equal to the second duration and that includes the PSFCH resource belonging to the second resource set is used as the third slot.

The second duration is (pre)configured or predefined, or may be configured by the network side. For example, the second duration may be determined based on a PSSCH feedback time interval K2 of the second device in the second resource set. A value of K2 may be (pre)configured or predefined, or may be configured based on resource pool configuration information corresponding to a second resource pool to which the second resource set belongs. For example, if K2=2, the second duration may be a duration corresponding to K2-1=1 slot.

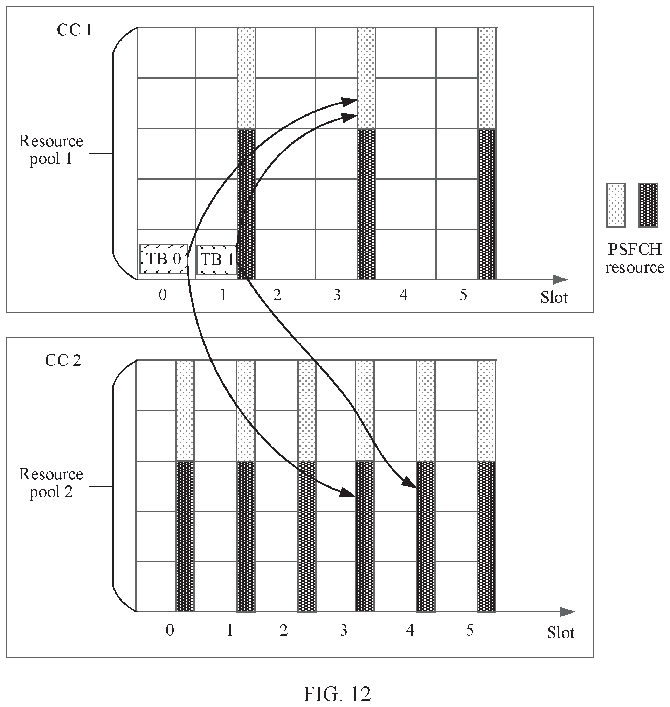

For example, an example in which the resource set is a resource pool is used for description. As shown in FIG. 12, two carriers are a CC 1 and a CC 2. The CC 1 includes a resource pool 1, the CC 2 includes a resource pool 2, and the resource pool 1 and the resource pool 2 are a resource pool bundle. A periodicity of a PSFCH slot in the resource pool 1 is two slots, and indexes of PSFCH slots of PSFCH resources in the resource pool 1 are 1, 3, 5, 7, ... A periodicity of a PSFCH slot in the resource pool 2 is one slot, and indexes of PSFCH slots of PSFCH resources in the resource pool 2 are 0, 1, 2, 3, 4, 5, ... The PSSCH feedback time interval K1 of the second device in the first resource set is equal to 2, and the first duration is equal to K1-1=1 slot. The PSSCH feedback time interval K2 of the second device in the second resource set is equal to 3, and the second duration is equal to K2-1=2 slots.

In a slot 0, the second device receives sidelink data TB 0 in the resource pool 1; and in a slot 1, the second device receives sidelink data TB 1 in the resource pool 1. An area filled with a pattern in the figure represents the PSFCH resource.

For the TB 0, if sidelink feedback information corresponding to the TB 0 is sent on the PSFCH resource in the resource pool 1, it may be determined, based on the first duration, that the sidelink feedback information corresponding to the TB 0 is sent in a slot 3. If sidelink feedback information corresponding to the TB 0 is sent on the PSFCH resource in the resource pool 2, it may be determined, based on the second duration, that the sidelink feedback information corresponding to the TB 0 is sent in the slot 3.

For the TB 1, if sidelink feedback information corresponding to the TB 1 is sent on the PSFCH resource in the resource pool 1, it may be determined, based on the first duration, that the sidelink feedback information corresponding to the TB 0 is sent in the slot 3. If sidelink feedback information corresponding to the TB 1 is sent on the PSFCH resource in the resource pool 2, it may be determined, based on the second duration, that the sidelink feedback information corresponding to the TB 1 is sent in a slot 4.

In Implementation 3, when cross-carrier sidelink feedback information transmission is performed, on the second carrier, for the sidelink data on the first carrier, the third slot in which the sidelink feedback information is sent on the second carrier is determined based on the second duration corresponding to the second carrier. In this way, for same sidelink feedback information, when the sidelink feedback information is sent on different carriers, slots in which the sidelink feedback information is located are determined based on different duration, thereby improving flexibility of sending the sidelink feedback information.

Example 3: Determine the index of the first PSFCH resource.

If the first sidelink feedback information is sent in a third slot, because the third slot includes at least one PSFCH resource, there may be a plurality of implementations in which a PSFCH resource is used as the first PSFCH resource using which the first sidelink feedback information is sent. In the following procedure, an example in which the index of the first PSFCH resource used to transmit the first sidelink feedback information of the first sidelink data on the first carrier is determined on the second carrier is used for description. Other cases may be deduced by analogy. Details are not described again.

Specifically, determining the index of the first PSFCH resource on the second carrier may include the following procedure.

Step 1: Determine a first PSFCH frequency domain resource set based on first information.

The first PSFCH frequency domain set includes at least one PSFCH frequency domain resource unit located in a second resource set, and the at least one PSFCH frequency domain resource unit is used to transmit sidelink feedback information of sidelink data in a first resource set, that is, the at least one PSFCH frequency domain resource unit corresponds to the first resource set. A PSFCH frequency domain resource unit included in the first PSFCH resource is one of the at least one PSFCH frequency domain resource unit. One PSFCH resource may include one PSFCH frequency domain resource unit.

Optionally, one PSFCH frequency domain resource unit may be one PRB.

Optionally, one PSFCH frequency domain resource unit may be a plurality of PRBs. For example, one PSFCH frequency domain resource unit may include K PRBs. K is (pre)configured. For example, in an unlicensed frequency band, to ensure transmit power of one PSFCH transmission, limited by power spectral density (power spectral density, PSD), sidelink feedback information corresponding to one PSSCH transmission needs to be sent on K PRBs. In this case, the K PRBs are located in a same interlace (interlace). In this case, the first PSFCH frequency domain resource set may be determined based on the first information and a value of K.

Optionally, one PSFCH frequency domain resource unit may be one interlace. For example, one PSFCH resource unit may include all PRBs on one interlace. For example, in an unlicensed frequency band, to meet an occupied channel bandwidth (occupied channel bandwidth, OCB) requirement, sidelink feedback information corresponding to one PSSCH transmission needs to be sent on one interlace. In this case, the first PSFCH frequency domain resource set may be determined based on the first information and a quantity of interlaces included in the first resource set.

The second resource set on the second carrier corresponds to one piece of first information, where the first information indicates a PSFCH frequency domain resource unit that is in a frequency domain resource included in the second resource set and that is used to transmit the sidelink feedback information of the sidelink data in the first resource set, or the first information indicates a PSFCH frequency domain resource unit that is in a frequency domain resource included in the second resource set and that is used to transmit a PSFCH corresponding to the first resource set, or the first information indicates a PSFCH frequency domain resource unit that is in a frequency domain resource included in the second resource set and that corresponds to a sidelink resource in the first resource set.

Because the second resource set includes a plurality of PRBs, the first information may also be understood as: indicating a PRB that is used to transmit the sidelink feedback information of the sidelink data in the first resource set and that is in PRBs included in the second resource set in frequency domain, or indicating a PRB that is used to transmit a PSFCH corresponding to the first resource set and that is in PRBs included in the second resource set in frequency domain, or indicating a PRB that corresponds to a sidelink resource in the first resource set and that is in PRBs included in the second resource set in frequency domain.

In this application, the first information is (pre)configured or predefined, or may be configured by the network. This is not limited in this application.

In this application, because the sidelink feedback information is sent across carriers, the second resource set includes a PSFCH resource corresponding to a sidelink resource in the second resource set, and includes a PSFCH resource corresponding to a sidelink resource in another resource set (for example, the first resource set). It may be understood that the PSFCH frequency domain resource unit used to transmit the sidelink feedback information in the second resource set includes a PSFCH frequency domain resource unit corresponding to the sidelink resource in the second resource set, and includes a PSFCH frequency domain resource unit corresponding to the sidelink resource in another resource set (for example, the first resource set).

First implementation:

In the first implementation, the PSFCH resource in the second resource set may be used to transmit sidelink feedback information corresponding to a plurality of resource sets on a plurality of carriers. The PSFCH frequency domain resource unit included in the PSFCH resource corresponding to the sidelink resource in the second resource set is used as one set, and the PSFCH frequency domain resource unit included in the PSFCH resource corresponding to the sidelink resource in the another resource set is used as another set.

Specifically, frequency domain resource units used to transmit the sidelink feedback information in the second resource set are divided into two sets: the first PSFCH frequency domain resource set and a second PSFCH frequency domain resource set. To be specific, the PSFCH frequency domain resource unit corresponding to the sidelink resources in the second resource set is located in one set, and the PSFCH frequency domain resource unit corresponding to the sidelink resource in the another resource set is located in another set.

The first PSFCH frequency domain resource set includes at least one PSFCH frequency domain resource unit. A PSFCH frequency domain resource unit included in the second PSFCH frequency domain resource set is used to transmit sidelink feedback information corresponding to sidelink data carried on a sidelink resource in at least one resource set. The at least one resource set herein includes a resource set other than the second resource set. For example, the at least one resource set includes the first resource set. That is, the PSFCH frequency domain resource unit included in the first PSFCH frequency domain resource set is not only used to transmit the sidelink feedback information of the sidelink data in the first resource set, but also used to transmit sidelink feedback information of sidelink data in the another resource set.

The second PSFCH frequency domain resource set includes at least one PSFCH frequency domain resource unit, and the PSFCH frequency domain resource unit included in the second PSFCH frequency domain resource set is used to transmit sidelink feedback information corresponding to sidelink data carried on a sidelink resource in the second resource set. In other words, the PSFCH frequency domain resource unit included in the second PSFCH frequency domain resource set corresponds to the sidelink resource in the second resource set.

For ease of description, in the first implementation, the first information indicating the first PSFCH frequency domain resource set is referred to as first PSFCH frequency domain information, and information indicating the second PSFCH frequency domain resource set is referred to as second PSFCH frequency domain information.

In this implementation, the first PSFCH frequency domain information may indicate a quantity of PSFCH frequency domain resource units included in the first PSFCH frequency domain resource set and a location of each PSFCH frequency domain resource unit. The second PSFCH frequency domain information may indicate a quantity of PSFCH frequency domain resource units included in the second PSFCH frequency domain resource set and a location of each PSFCH frequency domain resource unit.

For example, the first PSFCH frequency domain information and the second PSFCH frequency domain information may be bitmaps. For example, if the second resource set includes N PRBs, the first PSFCH frequency domain information includes N1 bits, and the second PSFCH frequency domain information includes N2 bits, where N1+N2=N, and N, N1, and N2 are integers greater than 0. All of the N1 bits one-to-one correspond to N1 PRBs in the N PRBs, and all of the N2 bits one-to-one correspond to N2 PRBs in the N PRBs. There is no same PRB in the N1 PRBs and the N2 PRBs, that is, there is no same PRB in a PRB corresponding to a bit in the first PSFCH frequency domain information and a PRB corresponding to a bit in the second PSFCH frequency domain information.

In an implementation, the first PSFCH frequency domain information and the second PSFCH frequency domain information may be bitmaps. For example, if the second resource set includes N PRBs, the first PSFCH frequency domain information includes N1 bits, and the second PSFCH frequency domain information includes N2 bits, where N1=N2=N, and N, N1, and N2 are integers greater than 0. All of the N1 bits one-to-one correspond to N1 PRBs in the N PRBs, and all of the N2 bits one-to-one correspond to N2 PRBs in the N PRBs. Further, optionally, a PRB that is used to transmit a PSFCH and that is indicated by the first PSFCH frequency domain information and a PRB that is used to transmit a PSFCH and that is indicated by the second PSFCH frequency domain information are orthogonal to each other.

For one of the N1 bits, for example, a first bit, when a value of the first bit is a first value, it indicates that a PRB that corresponds to the first bit and that is in the N1 PRBs corresponding to the N1 bits is used to transmit the sidelink feedback information, that is, the PRB is the PSFCH frequency domain resource unit used to transmit the sidelink feedback information, that is, the PRB is used to transmit the sidelink feedback information corresponding to the sidelink data carried on the sidelink resource in the second resource set; or when a value of the first bit is a second value, it indicates that a PRB that corresponds to the first bit and that is in the N1 PRBs is not used to transmit the sidelink feedback information, that is, the PRB is not the PSFCH frequency domain resource unit used to transmit the sidelink feedback information, that is, the PRB is not used to transmit the sidelink feedback information corresponding to the sidelink data carried on the sidelink resource in the second resource set. The first value and the second value are preset values or preconfigured. For example, the first value is 1, and the second value is 0.

Similarly, for one of the N2 bits, for example, a second bit, when a value of the second bit is a first value, it indicates that a PRB that corresponds to the second bit and that is in the N2 PRBs corresponding to the N2 bits is used to transmit the sidelink feedback information, that is, the PRB is the PSFCH frequency domain resource unit used to transmit the sidelink feedback information, that is, the PRB is used to transmit the sidelink feedback information corresponding to the sidelink data carried on the sidelink resource in the at least one resource set; or when a value of the second bit is a second value, it indicates that a PRB that corresponds to the second bit and that is in the N2 PRBs is not used to transmit the sidelink feedback information, that is, the PRB is not the PSFCH frequency domain resource unit used to transmit the sidelink feedback information, that is, the PRB is not used to transmit the sidelink feedback information corresponding to the sidelink data carried on the sidelink resource in the at least one resource set.

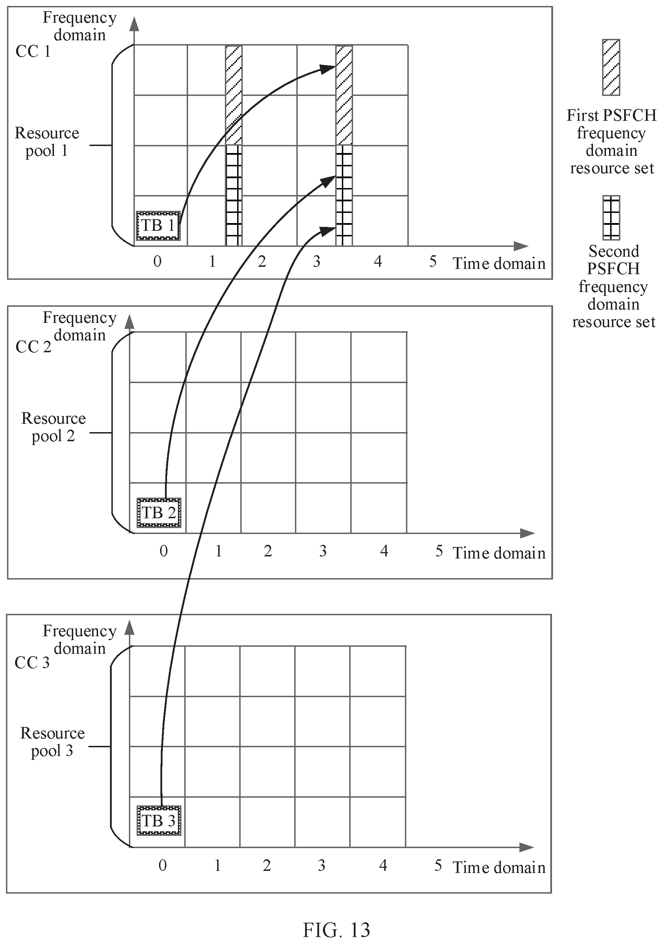

For example, as shown in FIG. 13, three carriers are a CC 1, a CC 2, and a CC 3. The CC 1 includes a resource pool 1, the CC 2 includes a resource pool 2, the CC 3 includes a resource pool 3, and the resource pool 1 includes a PSFCH resource corresponding to a sidelink resource in the resource pool 2, and includes a PSFCH resource corresponding to a sidelink resource in the resource pool 3.

Frequency domain resources in the resource pool 1 include a first PSFCH frequency domain resource set and a second PSFCH frequency domain resource set. In the figure, a PSFCH frequency domain resource unit included in the first PSFCH frequency domain resource set is represented by using a grid filled with a diagonal pattern, and a PSFCH frequency domain resource unit included in the second PSFCH frequency domain resource set is represented by using a grid filled with a grid pattern.

It is assumed that in a slot 0, sidelink data TB 1 is transmitted in the resource pool 1, sidelink data TB 2 is transmitted in the resource pool 2, and sidelink data TB 3 is transmitted in the resource pool 3.

For the TB 1, sidelink feedback information corresponding to the TB 1 may be transmitted by using the PSFCH frequency domain resource unit in the first PSFCH frequency domain resource set. If there is also a PSFCH resource corresponding to a sidelink resource in the resource pool 1 in the resource pool 2 or the resource pool 3, sidelink feedback information corresponding to the PSFCH resource may be transmitted by using a PSFCH frequency domain resource unit in the resource pool 2 or the resource pool 3.

For the TB 2, sidelink feedback information corresponding to the TB 2 may be transmitted by using the PSFCH frequency domain resource unit in the second PSFCH frequency domain resource set. This is merely an example. The sidelink feedback information corresponding to the TB 2 may be transmitted by using a PSFCH frequency domain resource unit in the resource pool 2.

For the TB 3, sidelink feedback information corresponding to the TB 3 may be transmitted by using the PSFCH frequency domain resource unit in the second PSFCH frequency domain resource set. This is merely an example. The sidelink feedback information corresponding to the TB 3 may be transmitted by using a PSFCH frequency domain resource unit in the resource pool 3.

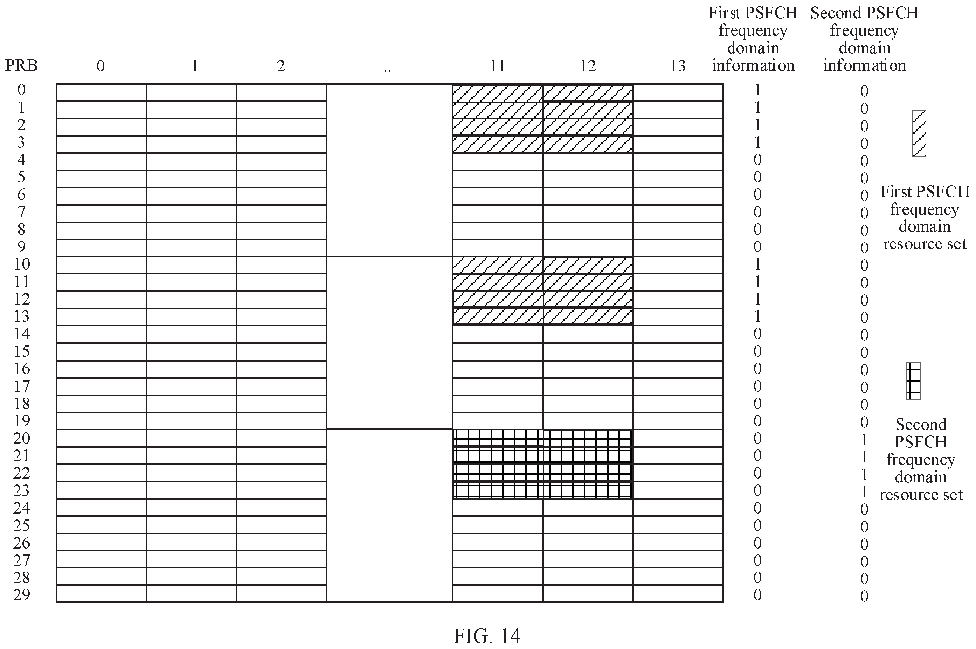

With reference to FIG. 13, as shown in FIG. 14, if the resource pool 1 includes 30 PRBs, indexes of the 30 PRBs are 0 to 29. PRBs whose indexes are 0 to 19 may be used to transmit the sidelink feedback information corresponding to the sidelink data in the resource pool 1, and PRBs whose indexes are 20 to 29 may be used to transmit the sidelink feedback information corresponding to the sidelink data in the resource pool 2 or the resource pool 3. In an implementation, the first PSFCH frequency domain information may indicate PRBs that are in the PRBs whose indexes are 0 to 19 and that are used to transmit the sidelink feedback information corresponding to the sidelink data in the resource pool 1, and the second PSFCH frequency domain information may indicate PRBs that are in the PRBs whose indexes are 20 to 29 and that are used to transmit the sidelink feedback information corresponding to the sidelink data in the resource pool 2 or the resource pool 3.

For example, as shown in FIG. 14, the first PSFCH frequency domain information includes 30 bits, and one bit corresponds to one of the PRBs whose indexes are 0 to 29; and the second PSFCH frequency domain information includes 30 bits, and one bit corresponds to one of the PRBs whose indexes are 0 to 29. For example, the first PSFCH frequency domain information is 11110 0000 11110 0000 00000 00000, and the second PSFCH frequency domain information is 00000 00000 00000 00000 11110 0000. The first PSFCH frequency domain information indicates that PRBs whose indexes are 0 to 3 and 10 to 13 are used to transmit the sidelink feedback information corresponding to the sidelink data in the resource pool 1; and the second PSFCH frequency domain information indicates that PRBs whose indexes are 20 to 23 are used to transmit the sidelink feedback information corresponding to the sidelink data in the resource pool 2 or the resource pool 3. That is, the first PSFCH frequency domain resource set includes the PRBs whose indexes are 0 to 3 and 10 to 13, and the second PSFCH frequency domain resource set includes the PRBs whose indexes are 20 to 23. In the figure, the PSFCH frequency domain resource unit included in the first PSFCH frequency domain resource set is represented by using a grid filled with a diagonal pattern, and the PSFCH frequency domain resource unit included in the second PSFCH frequency domain resource set is represented by using a grid filled with a grid pattern.

Second implementation:

In the second implementation, if the PSFCH resource in the second resource set may be used to transmit sidelink feedback information corresponding to a plurality of resource sets on a plurality of carriers, a PSFCH frequency domain resource unit, included in a PSFCH resource, that corresponds to each of the plurality of resource sets and that is in the second resource set is used as one set.

Specifically, frequency domain resource units used to transmit the sidelink feedback information in the second resource set are divided into a plurality of PSFCH frequency domain resource sets, and each of the plurality of PSFCH frequency domain resource sets corresponds to one resource set.

For one PSFCH frequency domain resource set in the plurality of PSFCH frequency domain resource sets, a PSFCH frequency domain resource unit included in the PSFCH frequency domain resource set is used to transmit sidelink feedback information corresponding to sidelink data carried on a sidelink resource in a resource set corresponding to the PSFCH frequency domain resource set, and may also be understood as that the PSFCH frequency domain resource unit included in the PSFCH frequency domain resource set corresponds to the sidelink resource in the resource set corresponding to the PSFCH frequency domain resource set.

Each piece of PSFCH frequency domain information may indicate a quantity of frequency domain resource units included in one PSFCH frequency domain resource set and a location of each frequency domain resource unit. In this implementation, PSFCH frequency domain information corresponding to the first resource set is the first information, and a PSFCH frequency domain resource set corresponding to the first resource set is the first PSFCH frequency domain resource set. A PSFCH frequency domain resource unit included in the first PSFCH frequency domain resource set is used only to transmit sidelink feedback information of sidelink data in the first resource set.

In the second implementation, PSFCH frequency domain information corresponding to each resource set may be a bitmap, and one bit in bits included in each PSFCH frequency domain information corresponds to one PRB in the N PRBs included in the second resource set. For specific content, refer to the descriptions of the first PSFCH frequency domain information or the second PSFCH frequency domain information. Details are not described herein again.

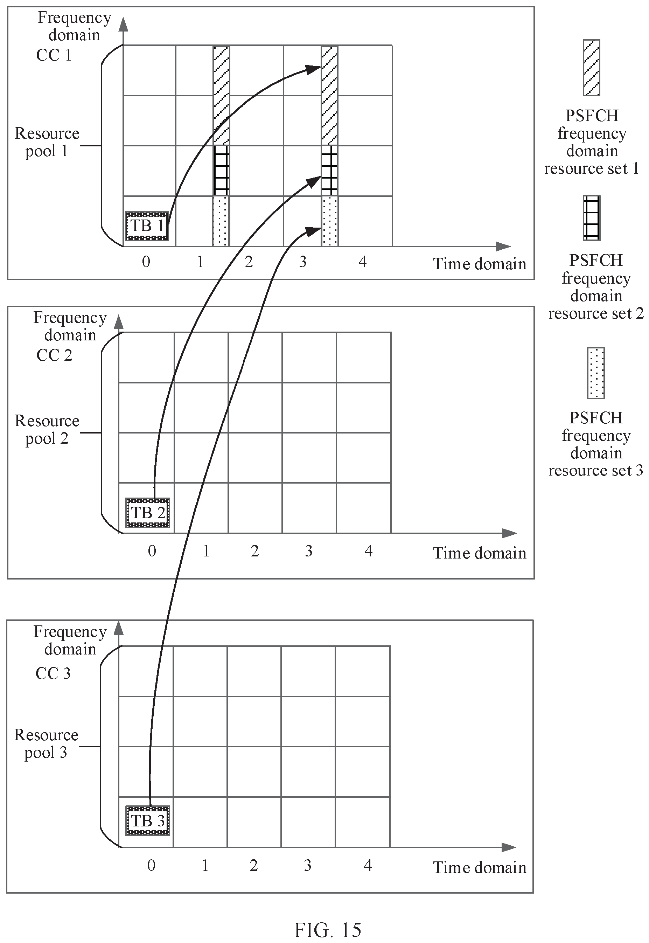

For example, as shown in FIG. 15, three carriers are a CC 1, a CC 2, and a CC 3. The CC 1 includes a resource pool 1, the CC 2 includes a resource pool 2, the CC 3 includes a resource pool 3, and the resource pool 1 includes a PSFCH resource corresponding to a sidelink resource in the resource pool 2, and includes a PSFCH resource corresponding to a sidelink resource in the resource pool 3.

Frequency domain resources in the resource pool 1 include a PSFCH frequency domain resource set 1, a PSFCH frequency domain resource set 2, and a PSFCH frequency domain resource set 3. In the figure, a PSFCH frequency domain resource unit included in the PSFCH frequency domain resource set 1 is represented by a grid filled with a diagonal pattern, a PSFCH frequency domain resource unit included in the PSFCH frequency domain resource set 2 is represented by a grid filled with a grid pattern, and a PSFCH frequency domain resource unit included in the PSFCH frequency domain resource set 3 is represented by a grid filled with a black pattern.

The PSFCH frequency domain resource unit included in the PSFCH frequency domain resource set 1 corresponds to the sidelink resource in the resource pool 1, the PSFCH frequency domain resource unit included in the PSFCH frequency domain resource set 2 corresponds to the sidelink resource in the resource pool 2, and the PSFCH frequency domain resource unit included in the PSFCH frequency domain resource set 3 corresponds to the sidelink resource in the resource pool 3.

It is assumed that in a slot 0, sidelink data TB 1 is transmitted in the resource pool 1, sidelink data TB 2 is transmitted in the resource pool 2, and sidelink data TB 3 is transmitted in the resource pool 3.

For the TB 1, sidelink feedback information corresponding to the TB 1 may be transmitted by using the PSFCH frequency domain resource unit in the PSFCH frequency domain resource set 1. If there is also a PSFCH resource corresponding to a sidelink resource in the resource pool 1 in the resource pool 2 or the resource pool 3, sidelink feedback information corresponding to the PSFCH resource may be transmitted by using a PSFCH frequency domain resource unit in the resource pool 2 or the resource pool 3.

For the TB 2, sidelink feedback information corresponding to the TB 2 may be transmitted by using the PSFCH frequency domain resource unit in the PSFCH frequency domain resource set 2. This is merely an example. The sidelink feedback information corresponding to the TB 2 may be transmitted by using a PSFCH frequency domain resource unit in the resource pool 2.

For the TB 3, sidelink feedback information corresponding to the TB 3 may be transmitted by using the PSFCH frequency domain resource unit in the PSFCH frequency domain resource set 3. This is merely an example. The sidelink feedback information corresponding to the TB 3 may be transmitted by using a PSFCH frequency domain resource unit in the resource pool 3.

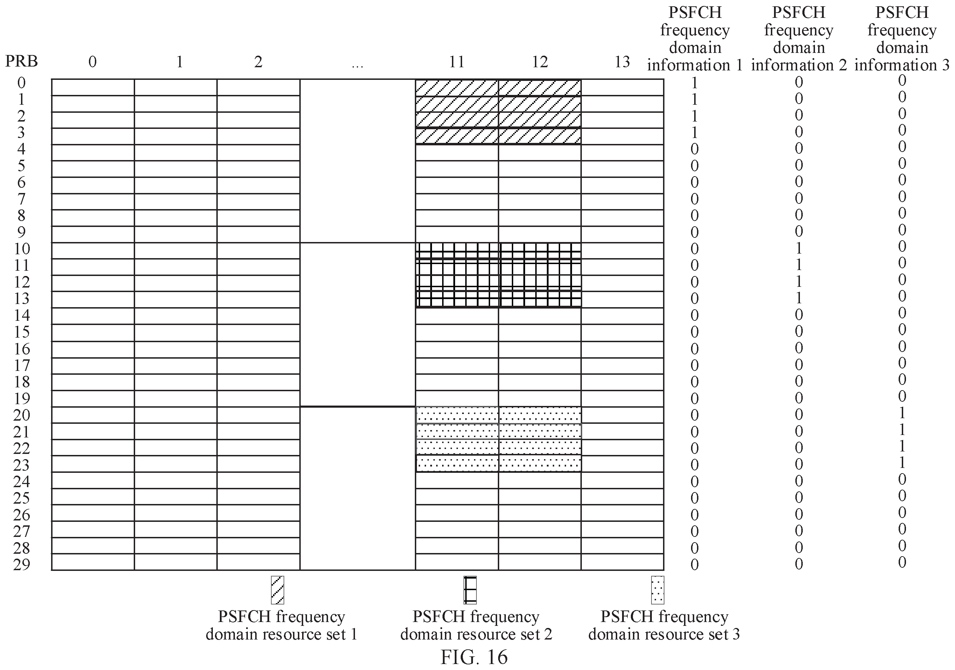

With reference to FIG. 15, as shown in FIG. 16, if the resource pool 1 includes 30 PRBs, indexes of the 30 PRBs are 0 to 29. PRBs whose indexes are 0 to 9 may be used to transmit the sidelink feedback information corresponding to the sidelink data in the resource pool 1, PRBs whose indexes are 10 to 19 may be used to transmit the sidelink feedback information corresponding to the sidelink data in the resource pool 2, and PRBs whose indexes are 20 to 29 may be used to transmit the sidelink feedback information corresponding to the sidelink data in the resource pool 3. In an implementation, PSFCH frequency domain information 1 may indicate PRBs that are in the PRBs whose indexes are 0 to 9 and that are used to transmit the sidelink feedback information corresponding to the sidelink data in the resource pool 1, PSFCH frequency domain information 2 may indicate PRBs that are in the PRBs whose indexes are 10 to 19 and that are used to transmit the sidelink feedback information corresponding to the sidelink data in the resource pool 2, and the PSFCH frequency domain information may indicate PRBs that are in the PRBs whose indexes are 20 to 29 are used to transmit the sidelink feedback information corresponding to the sidelink data in the resource pool 3.

For example, as shown in FIG. 16, the PSFCH frequency domain information 1 includes 10 bits, and one bit corresponds to one of the PRBs whose indexes are 0 to 9; the PSFCH frequency domain information 2 includes 10 bits, and one bit corresponds to one of the PRBs whose indexes are 10 to 19; and the PSFCH frequency domain information 3 includes 10 bits, and one bit corresponds to one of the PRBs whose indexes are 20 to 29. For example, the PSFCH frequency domain information 1 is 11110 0000 00000 00000 00000 00000; the PSFCH frequency domain information 2 is 00000 00000 11110 0000 00000 00000; and the PSFCH frequency domain information 3 is 00000 00000 00000 00000 11110 0000. The PSFCH frequency domain information 1 indicates that PRBs whose indexes are 0 to 3 are used to transmit the sidelink feedback information corresponding to the sidelink data in the resource pool 1; the PSFCH frequency domain information 2 indicates that PRBs whose indexes are 10 to 13 are used to transmit the sidelink feedback information corresponding to the sidelink data in the resource pool 2; and the PSFCH frequency domain information 3 indicates that PRBs whose indexes are 20 to 23 are used to transmit the sidelink feedback information corresponding to the sidelink data in the resource pool 3. To be specific, the PSFCH frequency domain resource set 1 includes the PRBs whose indexes are 0 to 3, the PSFCH frequency domain resource set 2 includes the PRBs whose indexes are 10 to 13, and the PSFCH frequency domain resource set 3 includes the PRBs whose indexes are 20 to 23. In the figure, the frequency domain resource unit included in the PSFCH frequency domain resource set 1 is represented by a grid filled with a diagonal pattern, the frequency domain resource unit included in the PSFCH frequency domain resource set 2 is represented by a grid filled with a grid pattern, and the frequency domain resource unit included in the PSFCH frequency domain resource set 3 is represented by a grid filled with a black pattern.

The foregoing procedure uses only the second resource set as an example. For a process of determining a PSFCH frequency domain resource set in another resource set, refer to the foregoing procedure. Details are not described herein again.

Step 2: Determine, based on the first PSFCH frequency domain resource set, a quantity $M^{\mathrm{PSFCH}}_{\mathrm{subch,\ slot}}$ of PSFCH frequency domain resource units that correspond to each subchannel in the first resource set and that are in the second resource set.

In an implementation, the quantity of PSFCH frequency domain resource units that correspond to each subchannel in the first resource set and that are in the second resource set may be determined based on a quantity of PSFCH frequency domain resource units that correspond to the first resource set and that are in the second resource set.

For example, if the first implementation is used in step 1, that is, the PSFCH frequency domain resource unit used to transmit the sidelink feedback information in the second resource set is divided into two PSFCH frequency domain resource sets: The PSFCH frequency domain resource unit corresponding to the sidelink resource in the second resource set is located in the second PSFCH frequency domain resource set, and the PSFCH frequency domain resource unit corresponding to the sidelink resource in the at least one resource set other than the second resource set is located in the first PSFCH frequency domain resource set. It is assumed that a quantity of resource sets in the "at least one resource set" herein is n, where n is an integer greater than 0. In this case, the PSFCH frequency domain resource unit included in the first PSFCH frequency domain resource set corresponds to the at least one resource set (that is, the n resource sets).

With reference to the foregoing description, the quantity $M_{\text{subch, slot}}^{\text{PSFCH}}$ of frequency domain resource units that correspond to each subchannel in the first resource set and that are in the second resource set may satisfy the following form:

$$M_{\text{subch, slot}}^{\text{PSFCH}} = M_{\text{PRB, set}}^{\text{PSFCH}} / \left( \sum_{i=1}^{n} \left( N_{\text{subch},i} \right) \cdot N_{\text{PSSCH}}^{\text{PSFCH}} \right).$$

$M_{\text{PRB, set}}^{\text{PSFCH}}$ represents a quantity of PSFCH frequency domain resource units included in the first PSFCH frequency domain resource set, $N_{\text{subch},i}$ represents a quantity of subchannels included in an $i^{\text{th}}$ resource set in the at least one resource set, and $N_{\text{PSSCH}}^{\text{PSFCH}}$ represents a periodicity of a PSFCH resource corresponding to the second resource set.

It should be understood that, in the foregoing manner, a quantity of PSFCH resource units that correspond to each subchannel in a resource set other than the first resource set in the "at least one resource set" and that are in the second resource set may be further determined.

For example, if the second implementation is used in step 1, that is, the frequency domain resource unit that corresponds to each resource set and that is in the second resource set is used as one PSFCH frequency domain set, in this case, the PSFCH frequency domain resource unit included in the first PSFCH frequency domain resource set corresponds only to the first resource set, the quantity $M_{\text{subch, slot}}^{\text{PSFCH}}$ of PSFCH frequency domain resource units that correspond to each subchannel in the first resource set and that are in the second resource set may satisfy the following form:

$$M_{\text{subch, slot}}^{\text{PSFCH}} = M_{\text{PRB, set}}^{\text{PSFCH}} / \left( N_{\text{subch},1} \cdot N_{\text{PSSCH}}^{\text{PSFCH}} \right).$$

$M_{\text{PRB, set}}^{\text{PSFCH}}$ represents a quantity of PSFCH frequency domain resource units included in the first PSFCH frequency domain resource set, $N_{\text{subch},1}$ represents a quantity of subchannels included in the first resource set, and $N_{\text{PSSCH}}^{\text{PSFCH}}$ represents a periodicity of a PSFCH resource corresponding to the second resource set.

It can be learned from step 2 that each subchannel in the first resource set corresponds to $M_{\text{subch, slot}}^{\text{PSFCH}}$ PSFCH frequency domain resource units in the second resource set. If the second device sends the first sidelink feedback information in the third slot, the second device further needs to determine indexes of the $M_{\text{subch, slot}}^{\text{PSFCH}}$ PSFCH frequency domain resource units that correspond to each subchannel occupied by the first sidelink resource and that are in the second resource set. The following provides description by using step 3.

Step 3: Determine an index of a PSFCH frequency domain resource unit that corresponds to the subchannel occupied by the first sidelink resource and that is in the second resource set.

The first sidelink resource is located in the first slot. To avoid loss of generality, in this application, an index of a PSFCH frequency domain resource unit that corresponds to each subchannel in the first slot (that is, a PSSCH slot in which the first sidelink resource is located) associated with the third slot (that is, a PSFCH slot in which the first sidelink feedback information is located) and that is in the second resource set may be determined.

The third slot may be associated with a plurality of PSSCH slots. For a PSSCH slot whose index is i in the plurality of PSSCH slots, an index of a PSFCH frequency domain resource of a subchannel j in the PSSCH slot i associated with the third slot may be determined.

Specifically, in the first implementation, the PSFCH frequency domain resource unit included in the first PSFCH frequency domain resource set corresponds to the at least one resource set (that is, the n resource sets). For example, the resource set is a resource pool, and three carriers are a CC 1, a CC 2, and a CC 3. The CC 1 includes a resource pool 1, the CC 2 includes a resource pool 2, the CC 3 includes a resource pool 3, and the resource pool 1 includes a PSFCH resource corresponding to a sidelink resource in the resource pool 2, and includes a PSFCH resource corresponding to a sidelink resource in the resource pool 3. The PSFCH frequency domain resource unit included in the first PSFCH frequency domain resource set is represented by an area filled by a grid in the figure. A PSFCH #2 is the third slot, and the third slot is associated with a slot 0 and a slot 1 in the resource pool 2 and associated with a slot 0 and a slot 1 in the resource pool 3.

The first PSFCH frequency domain resource set is associated with a sidelink data resource from at least one CC, and PSFCH frequency domain resource units included in the first PSFCH frequency domain resource set may be sequentially allocated to PSSCH slots and subchannels associated with the PSFCH frequency domain resource units. For example, the PSFCH frequency domain resource units included in the first frequency domain resource set may be sequentially allocated to PSSCH slots and subchannels associated with the third slot in an ascending order of slots, then in an ascending order of subchannels in one CC, and then in an ascending order of indexes of CCs.

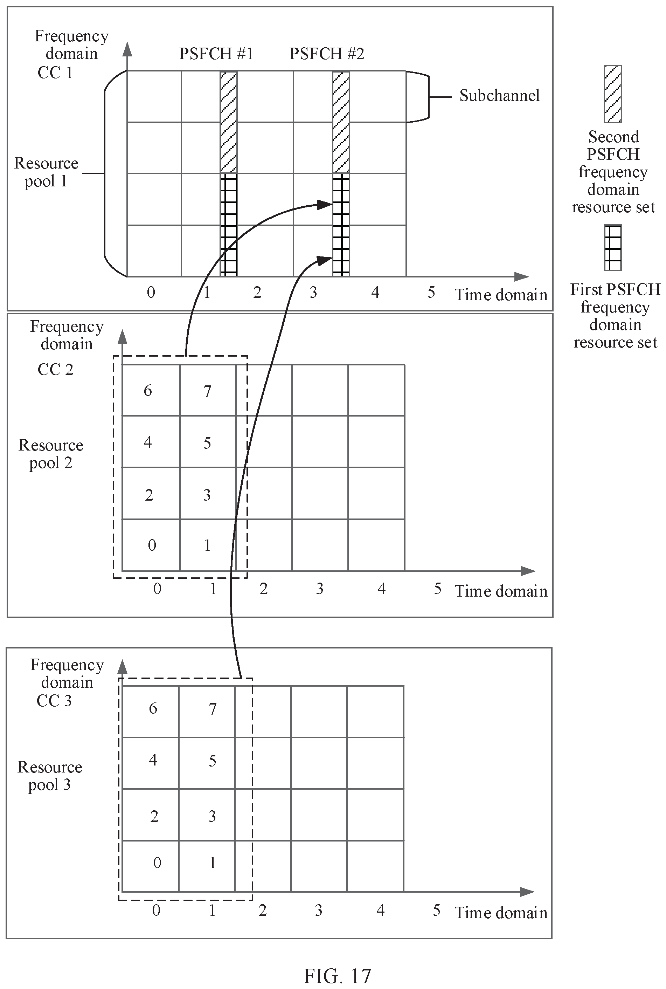

According to different numbering manners, there are different index determining manners. As shown in FIG. 17, a PSFCH #1 and a PSFCH #2 each include the PSFCH frequency domain resource unit in the first PSFCH frequency domain resource set and the PSFCH frequency domain resource unit in the second PSFCH frequency domain resource set. In a numbering manner 1, subchannels included in a resource set on each CC are separately numbered. To be specific, as shown in the figure, sidelink resources in the slot 0 and the slot 1 in the resource pool 2 on the CC 2 are associated with a first PSFCH frequency domain resource set on the CC 1, and each slot corresponds to four subchannels. After the eight subchannels corresponding to the two slots are separately numbered, indexes are 0, 1, 2, 3, 4, 5, 6, and 7. In the figure, a subchannel 0 is located in the slot 0, and a subchannel 1 is located in the slot 1. Other cases are deduced by analogy. Details are not described again.

Similarly, sidelink resources in the slot 0 and the slot 1 in the resource pool 2 on the CC 3 are associated with the first PSFCH frequency domain resource set on the CC 1, and each slot corresponds to four subchannels. After the eight subchannels corresponding to the two slots are separately numbered, indexes are 0, 1, 2, 3, 4, 5, 6, and 7.

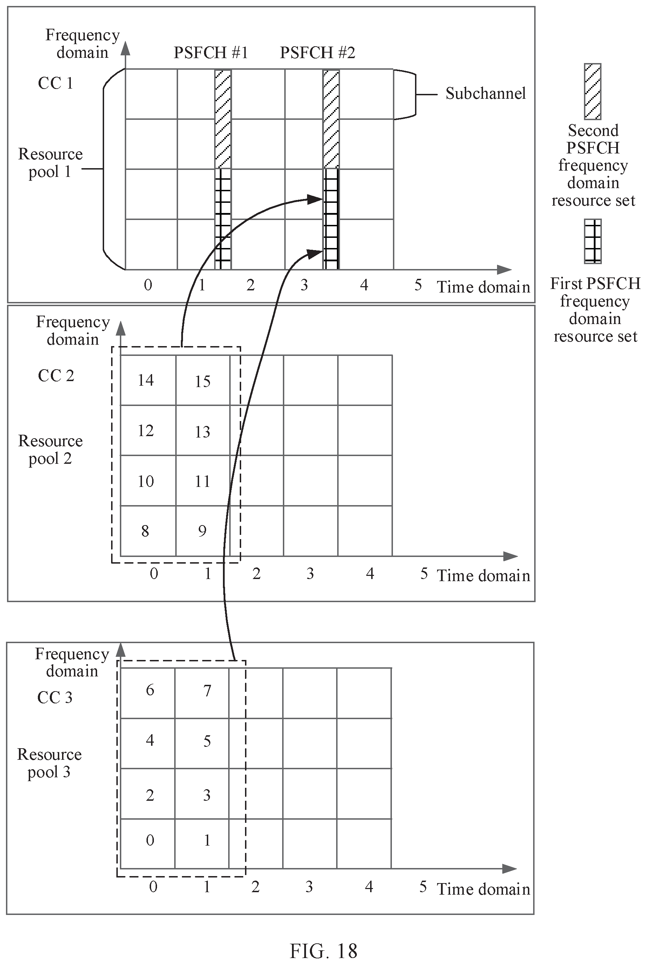

As shown in FIG. 18, a PSFCH #1 and a PSFCH #2 each include the PSFCH frequency domain resource unit in the first PSFCH frequency domain resource set and the PSFCH frequency domain resource unit in the second PSFCH frequency domain resource set. In a numbering manner 2, subchannels included in a resource set on at least one CC associated with the first PSFCH frequency domain resource set are jointly numbered, that is, as shown in the figure, in the resource pool 2 on the CC 2, after eight subchannels corresponding to the slot 0 and the slot 1 are numbered, indexes are 0, 1, 2, 3, 4, 5, 6, and 7. In the resource pool 2 on the CC 2, after eight subchannels corresponding to the slot 0 and the slot 1 are numbered, indexes are 8, 9, 10, 11, 12, 13, 14, and 15.

In the numbering manner 1, for a subchannel j in a slot i on a CC c, an index range of a PSFCH frequency domain resource unit corresponding to the subchannel j in the third slot is:

$$\left[\left(i + j \cdot N_{PSSCH}^{PSFCH} + c \cdot N_c^{subCH}\right) \cdot M_{subch,\,slot}^{PSFCH}, \left(i + 1 + j \cdot N_{PSSCH}^{PSFCH} + c \cdot N_c^{subCH}\right) \cdot M_{subch,\,slot}^{PSFCH} - 1\right].$$

$0 \le i < N_{PSSCH}^{PSFCH}$, $0 \le j < N_c^{subCH}$, and $0 \le c < N_{cc}$. $N_{cc}$ represents a total quantity of carriers (that is, a total quantity of resource sets) associated with the first PSFCH frequency domain resource set, and these CCs are numbered in a specific order, for example, in an order of indexes of the CCs. It should be understood that, because the CC 2 and the CC 3 are associated with the first PSFCH frequency domain resource set on the CC 1, after renumbering is performed according to the order of the indexes, c corresponding to the CC 2 is 0, and c corresponding to the CC 3 is 1. $N_c^{subCH}$ indicates a quantity of subchannels occupied by a resource set (a resource pool or an RB set) on the CC c associated with the first PSFCH frequency domain resource set. The CC c indicates a CC whose number is c after renumbering.

In the numbering manner 2, because subchannels in the PSSCH slot associated with the PSFCH slot are renumbered as 0 to $N_{total}^{subCH}$ in time domain first, in frequency domain within the CC, and then across CCs, and $N_{total}^{subCH} = \sum_{c=1}^{N_{cc}} (N_c^{subCH}) \cdot N_{PSSCH}^{PSFCH}$, an index range of a PSFCH resource unit corresponding to a sidelink data resource whose number is $N_n^{subCH}$ in the third slot is $\left[N_n^{subCH} \cdot M_{subch,\,slot}^{PSFCH}, \left(N_n^{subCH} + 1\right) \cdot M_{subch,\,slot}^{PSFCH} - 1\right].$

In the second implementation, the PSFCH frequency domain resource unit included in the first PSFCH frequency domain resource set corresponds only to the first resource set. The PSFCH frequency domain resource units included in the first PSFCH frequency domain resource set may be sequentially allocated to the PSSCH slots and the subchannels associated with the PSFCH frequency domain resource units. Because the first PSFCH frequency domain resource set corresponds to a sidelink transmission resource on one CC, the PSFCH frequency domain resource units included in the first PSFCH frequency domain resource set may be sequentially allocated to the subchannels in the PSSCH slot in an ascending order of PSSCH slots, and then an ascending order of subchannels.

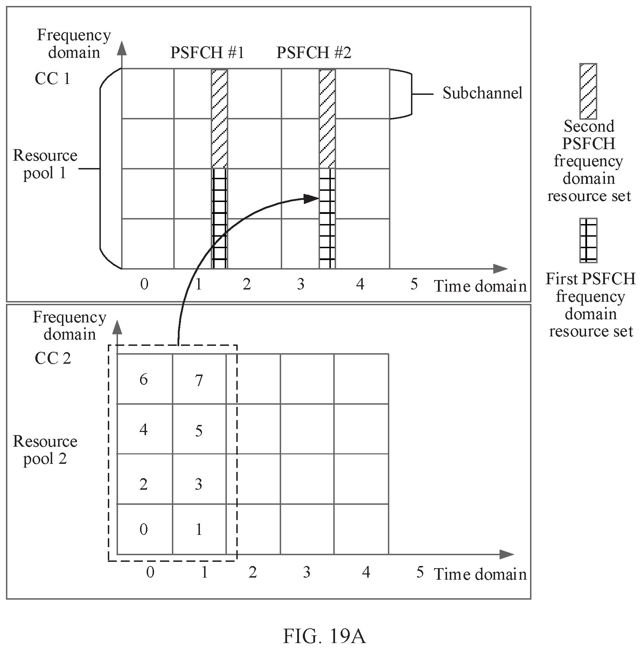

As shown in FIG. 19A, a PSFCH #1 and a PSFCH #2 each include the PSFCH frequency domain resource unit in the first PSFCH frequency domain resource set and the PSFCH frequency domain resource unit in the second PSFCH frequency domain resource set. A PSFCH #2 is the third slot, and the third slot is associated with a slot 0 and a slot 1 in the resource pool 2. For a subchannel whose frequency domain number is j in a slot i in the first resource set, an index range of a PSFCH resource corresponding to the subchannel is:

$$\left[\left(i + j \cdot N_{PSSCH}^{PSFCH}\right) \cdot M_{subch, slot}^{PSFCH}, \left(i + 1 + j \cdot N_{PSSCH}^{PSFCH}\right) \cdot M_{subch, slot}^{PSFCH} - 1\right].$$

Optionally, if the first PSFCH resource set is associated with subchannels in PSSCH slots of a plurality of resource sets, an index of a PSFCH frequency domain resource unit that corresponds to a subchannel in a PSSCH slot and that is in each of the plurality of resource sets associated with the third slot may be determined according to the foregoing method.

**Step 4: Determine a total quantity of PSFCH resources corresponding to the first sidelink resource.**

Specifically, the total quantity of PSFCH resources in the second resource set that correspond to the first sidelink resource is determined based on second information. The second information indicates to transmit feedback information by using a PSFCH resource corresponding to a 1st subchannel in at least one subchannel occupied by the first sidelink resource, or the second information indicates to transmit feedback information by using a PSFCH resource corresponding to any one of at least one subchannel. $N_{CS}^{PSFCH}$ represents a quantity of PSFCH sequence pairs that can be multiplexed on one PSFCH resource configured in a resource pool to which the second resource set belongs, and $M_{subch, slot}^{PSFCH}$ represents a quantity of PSFCH frequency domain resource units that correspond to each subchannel in the first resource set and that are in the second resource set. The second information indicates $N_{type}^{PSFCH}$. For example, the resource pool may configure $N_{type}^{PSFCH}$ to limit a PSFCH resource that can be used to transmit sidelink feedback information. There may be the following two solutions:

Solution 1: The second information is (pre)configured as a first value. In this case, the second information indicates to transmit the feedback information by using the PSFCH resource corresponding to the 1st subchannel in the at least one subchannel occupied by the first sidelink resource, and the resource pool to which the second resource set belongs configures $N_{type}^{PSFCH} = 1$, where $M = M_{subch, slot}^{PSFCH}$. The second device transmits the sidelink feedback information by using the PSFCH resource corresponding to the 1st subchannel of the first sidelink resource. In this case, the total quantity of PSFCH resources corresponding to the first sidelink resource satisfies:

$$R_{PRB, CS}^{PSFCH} = M_{subch, slot}^{PSFCH} \cdot N_{CS}^{PSFCH}.$$

Solution 2: The second information is (pre)configured as a second value. In this case, the second information indicates to transmit the feedback information by using the PSFCH resource corresponding to any one of the at least one subchannel, and the resource pool to which the second resource set belongs configures $N_{type}^{PSFCH} = N_{subch}^{PSSCH}$, where $M = M_{subch, slot}^{PSFCH}$. The second device may transmit the sidelink feedback information by using PSFCH resources corresponding to all subchannels of the first sidelink resource. In this case, the total quantity of PSFCH resources corresponding to the first sidelink resource satisfies:

$$R_{PRB, CS}^{PSFCH} = N_{subch}^{PSSCH} \cdot M_{subch, slot}^{PSFCH} \cdot N_{CS}^{PSFCH}.$$

$N_{subch}^{PSSCH}$ represents the quantity of subchannels occupied by the first sidelink resource.

Optionally, in the solution 2, the second information is (pre)configured as the second value. In this case, the second information indicates to transmit the feedback information by using the PSFCH resource corresponding to any one of the at least one subchannel. The second resource set is a resource block set in the resource pool. If the resource pool to which the second resource set belongs configure $N_{type}^{PSFCH} = N_{subch}^{PSSCH}, M = \sum_k M_{subch, slot,k}^{PSFCH}$, the second device may transmit the sidelink feedback information by using PSFCH resources corresponding to all subchannels of the first sidelink resource. In this case, the total quantity of PSFCH resources corresponding to the first sidelink resource satisfies:

$$R_{PRB, CS}^{PSFCH} = \sum_k M_{subch, slot,k}^{PSFCH} \cdot N_{subch,k}^{PSSCH} \cdot N_{CS}^{PSFCH}.$$

$N_{subch,k}^{PSSCH}$ represents a quantity of subchannels occupied by the first sidelink resource in a second resource set whose number is k in all second resource sets. It should be understood that the first sidelink resource occupies a same quantity of subchannels in a plurality of second resource sets. $M_{subch, slot,k}^{PSFCH}$ represents a quantity of PSFCH frequency domain resource units that correspond to each subchannel in the first resource set and that are in the second resource set whose number is k.

Step 5: Determine the first PSFCH resource.

The first PSFCH resource is determined based on a first identifier and a second identifier. The first identifier is located in the first sidelink data, and the second identifier is preconfigured or preset, or is configured by the network, or is indicated by using higher layer signaling. For example, the first identifier is $P_{ID}$, and the second identifier is $M_{ID}$. The second device selects a $(P_{ID} + M_{ID}) mod R_{PRB, CS}^{PSFCH}$ th PSFCH resource in $R_{PRB, CS}^{PSFCH}$ PSFCH resources corresponding to the first sidelink resource to send the first sidelink feedback information, where the PSFCH resource is the first PSFCH resource.

$P_{ID}$ represents a physical layer source address identifier (Identity, ID) carried in a second-stage control information in the first sidelink data. If the first sidelink feedback information is transmitted in a multicast 2 manner, $M_{ID}$ is an identifier (ID) configured by a higher layer of the second device for transmitting the first sidelink data. If the first sidelink feedback information is not transmitted in the multicast 2 manner, $M_{ID} = 0$.

The $R_{PRB, CS}^{PSFCH}$ PSFCH resources corresponding to the first sidelink resource are sorted in ascending order of indexes in frequency domain and then in ascending order of indexes in code domain. In this case, indexes of PRBs included in the first PSFCH resource is:

$$\left( (P_{ID} + M_{ID}) mod R_{PRB, CS}^{PSFCH} \right) mod \left( R_{PRB, CS}^{PSFCH} / (N_{CS}^{PSFCH} * N_{type}^{PSFCH}) \right).$$

A cyclic shift pair index (Cyclic Shift Pair Index) corresponding to the first sidelink feedback information (or the first PSFCH resource) transmitted in the PRB corresponding to the first PSFCH resource satisfies:

$$\text{Cyclic Shift Pair Index} = \left\lfloor \left( (P_{ID} + M_{ID}) mod R_{PRB, CS}^{PSFCH} \right) / \left( R_{PRB, CS}^{PSFCH} / (N_{CS}^{PSFCH} * N_{type}^{PSFCH}) \right) \right\rfloor.$$

⌊ ⌋ indicates rounding down.

It should be understood that when the first sidelink resource has a corresponding PSFCH resource in a plurality of resource sets on different carriers, the second device may choose, based on a capability of the second device, to send sidelink feedback information on one or more carriers.

Optionally, the first sidelink resource has a corresponding PSFCH resource in the first resource set and a corresponding PSFCH resource in the second resource set, and sidelink feedback information may be sent in the first resource set, and/or sidelink feedback information may be sent in the second resource set, where the first resource set is located on the first carrier, the second resource set is located on the second carrier, and the first carrier is different from the second carrier.

It may be understood that the foregoing step 1 to step 5 are merely an example, the foregoing steps do not represent an actual execution sequence, some steps may be performed synchronously, and a part or all of some examples in the foregoing steps may be combined.

It may be understood that before receiving the first sidelink feedback information, the first device may also determine, by using the method described above, the resource set in which the first PSFCH resource for transmitting the first sidelink feedback information is located, the slot in which the first sidelink feedback information is located, and the PSFCH resource that is used as the first PSFCH resource, to receive the first sidelink feedback information on the first PSFCH resource.

The foregoing process describes how to determine the PSFCH resource used for sending the sidelink feedback information when the sidelink feedback information is sent across carriers. Optionally, if the second device receives second sidelink data on the second carrier, the second device may also send, on the second carrier, second sidelink feedback information corresponding to the second sidelink data. How the second device determines, on the second carrier, the PSFCH resource for sending the second sidelink feedback information is not limited in this application. Details are not described herein again.

It should be noted that, in an unlicensed frequency band, to increase a feedback opportunity, one-to-many mapping is introduced for sidelink resources in a same RP, that is, one PSCCH/PSSCH resource corresponds to a plurality of PSFCH resources.

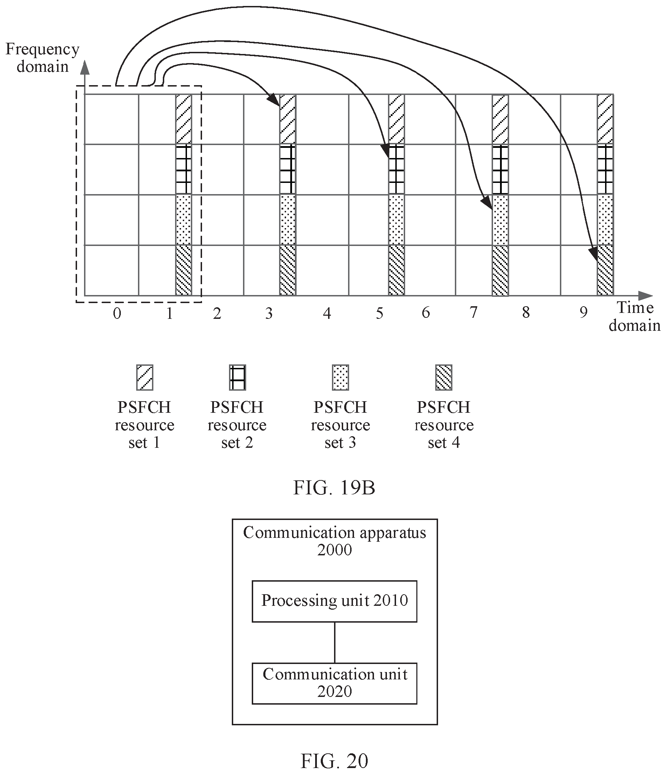

As shown in FIG. 19B, it is assumed that PSFCH resources in one PSFCH slot are divided into a plurality of PSFCH resource sets, for example, in the figure, divided into four PSFCH resource sets, which are a PSFCH resource set 1 to a PSFCH resource set 4. The four PSFCH resource sets are orthogonal to each other in frequency domain, that is, do not overlap. A 1st feedback opportunity corresponding to a PSCCH/PSSCH resource in the dashed box is in a PSFCH resource set 1 in a slot 3, a 2nd feedback opportunity is in a PSFCH resource set 2 in a slot 5, a 3rd feedback opportunity is in a PSFCH resource set 3 in a slot 7, and a 4th feedback opportunity is in a PSFCH resource set 4 in a slot 9.

The method provided in this application may be used in combination with the solution in which the one PSCCH/PSSCH resource corresponds to the plurality of PSFCH resources. That is, the method provided in this application does not conflict with the solution in which the one PSCCH/PSSCH resource corresponds to the plurality of PSFCH resources. For example, when the plurality of PSFCH resources corresponding to the one PSCCH/PSSCH resource is orthogonal to a PSFCH resource that corresponds to the PSCCH/PSSCH resource and that is on another carrier, for a TB transmitted in the PSCCH/PSSCH resource, only a PSFCH resource in this RP needs to be determined in a one-to-many mapping manner, or a PSFCH resource of the TB in an RP on the another carrier may be determined according to the method provided in this application. This is not limited in this application.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following are diagrams of possible structures of communication apparatuses according to embodiments of this application. The communication apparatuses may be configured to implement functions of the first device or the second device in the foregoing method embodiments, and therefore can also implement beneficial effects of the foregoing method embodiments.

As shown in FIG. 20, a communication apparatus 2000 includes a processing unit 2010 and a communication unit 2020. The communication apparatus 2000 is configured to implement the function of the terminal or the base station in the method embodiment shown in FIG. 4.

When the communication apparatus 2000 is configured to implement the function of the second device in the method embodiment shown in FIG. 4,

the processing unit is configured to receive M pieces of sidelink data on X carriers by using the communication unit, where the M pieces of sidelink data include first sidelink data, the X carriers include a first carrier, the first sidelink data is located on the first carrier, X is an integer greater than 0, and M is an integer greater than or equal to X; and
the processing unit is configured to send, on a second carrier in the X carriers by using the communication unit, first sidelink feedback information corresponding to the first sidelink data, where
a first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources.

When the communication apparatus 2000 is configured to implement the function of the first device in the method embodiment shown in FIG. 12,

the processing unit is configured to send M pieces of sidelink data on X carriers by using the communication unit, where the M pieces of sidelink data include first sidelink data, the X carriers include a first carrier, the first sidelink data is located on the first carrier, X is an integer greater than 0, and M is an integer greater than or equal to X; and
the processing unit is configured to receive, on a second carrier in the X carriers by using the communication unit, first sidelink feedback information corresponding to the first sidelink data, where
a first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources.

For more detailed descriptions of the processing unit 2010 and the communication unit 2020, directly refer to the related descriptions in the method embodiment shown in FIG. 12. Details are not described herein again.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be referred to as a processor, and may be an integrated circuit having a signal processing capability. In an implementation process, operations in the foregoing methods or the foregoing units may be implemented through a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

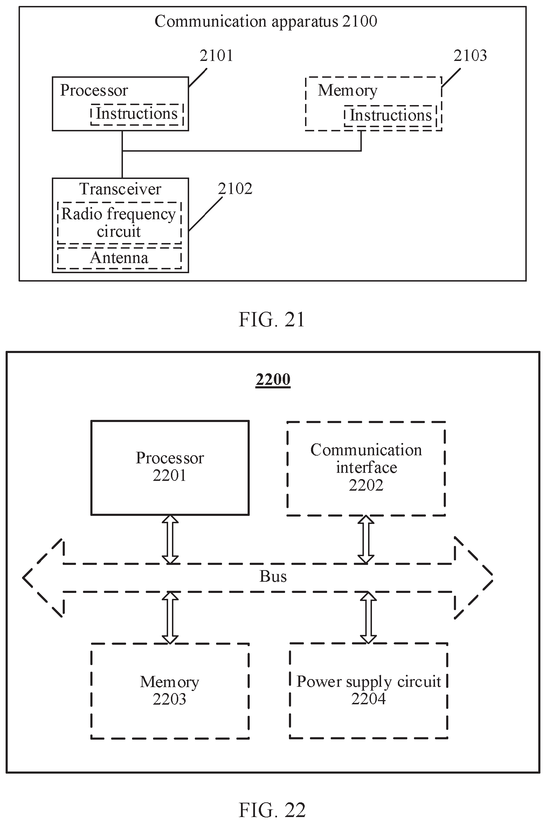

In another possible product form, the first device or the second device in embodiments of this application may be implemented by using a general bus architecture. For ease of description, refer to FIG. 21. FIG. 21 is a diagram of a structure of a communication apparatus 2100 according to an embodiment of this application. The communication apparatus 2100 includes a processor 2101 and a transceiver 2102. The communication apparatus 2100 may be a first device, or a chip or a chip system in a first device. Alternatively, the communication apparatus 2100 may be a second device, or a chip or a module in a second device. FIG. 21 shows only main components in the communication apparatus 2100. In addition to the processor 2101 and the transceiver 2102, the communication apparatus 2100 may further include a memory 2103 and an input/output apparatus (which is not shown in the figure).

Optionally, the processor 2101 is mainly configured to: process a communication protocol and communication data, and control the entire communication apparatus to execute a software program and process data of the software program. The memory 2103 is mainly configured to store a software program and data. The transceiver 2102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 2101, the transceiver 2102, and the memory 2103 may be connected through a communication bus.

After the communication apparatus is powered on, the processor 2101 may read the software program in the memory 2103, interpret and execute instructions of the software program, and process data of the software program. When data needs to be sent wirelessly, the processor 2101 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives the radio frequency signal through the antenna, converts the radio frequency signal into a baseband signal, and outputs the baseband signal to the processor 2101. The processor 2101 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 2000 may be in a form of the communication apparatus 2100 shown in FIG. 21.

In an example, functions/implementation processes of the processing unit 2010 in FIG. 20 may be implemented by the processor 2101 in the communication apparatus 2100 shown in FIG. 21 by invoking computer-executable instructions stored in the memory 2103. Functions/implementation processes of the communication unit 2020 in FIG. 20 may be implemented by the transceiver 2102 in the communication apparatus 2100 shown in FIG. 21.

In still another possible product form, the first device or the second device in this application may use a composition structure shown in FIG. 22, or include components shown in FIG. 22. FIG. 22 is a diagram of composition of a communication apparatus 2200 according to this application.

As shown in FIG. 22, the communication apparatus 2200 includes at least one processor 2201. Optionally, the communication apparatus further includes a communication interface 2202.

When related program instructions are executed in the at least one processor 2201, the apparatus 2200 may be enabled to implement the method provided in any one of the foregoing embodiments and any possible design thereof. Alternatively, the processor 2201 is configured to implement, through a logic circuit or by executing code instructions, the method provided in any one of the foregoing embodiments and any possible design thereof.

The communication interface 2202 may be configured to: receive the program instructions and transmit the program instructions to the processor. Alternatively, the communication interface 2202 may be configured to perform communication interaction between the communication apparatus 2200 and another communication device, for example, exchange control signaling and/or service data. For example, the communication interface 2202 may be configured to receive a signal from an apparatus other than the communication apparatus 2200, and transmit the signal to the processor 2201, or send a signal from the processor 2201 to a communication apparatus other than the communication apparatus 2200.

Optionally, the communication interface 2202 may be a code and/or data read/write interface circuit, or the communication interface 2202 may be a signal transmission interface circuit between a communication processor and a transceiver, or a pin of a chip.

Optionally, the communication apparatus 2200 may further include at least one memory 2203, and the memory 2203 may be configured to store the related program instructions and/or data that are/is needed. It should be noted that the memory 2203 may exist independently of the processor 2201, or may be integrated with the processor 2201. The memory 2203 may be located inside the communication apparatus 2200, or may be located outside the communication apparatus 2200. This is not limited.

Optionally, the communication apparatus 2200 may further include a power supply circuit 2204, and the power supply circuit 2204 may be configured to supply power to the processor 2201. The power supply circuit 2204 may be located in a same chip as the processor 2201, or may be located in a chip other than a chip in which the processor 2201 is located.

Optionally, the communication apparatus 2200 may further include a bus, and parts of the communication apparatus 2200 may be interconnected through the bus.

In some embodiments, in hardware implementation, a person skilled in the art may figure out that the communication apparatus 2000 shown in FIG. 20 may be in a form of the communication apparatus 2200 shown in FIG. 22.

In an example, functions/implementation processes of the processing unit 2010 in FIG. 20 may be implemented by the processor 2201 in the communication apparatus 2200 shown in FIG. 22 by invoking computer-executable instructions stored in the memory 2203. Functions/implementation processes of the communication unit 2020 in FIG. 20 may be implemented by the communication interface 2202 in the communication apparatus 2200 shown in FIG. 22.

It should be noted that the structure shown in FIG. 22 does not constitute a specific limitation on the first device or the second device. For example, in some other embodiments of this application, the first device or the second device may include more or fewer components than those shown in the figure, a combination of some components, splitting of some components, or a different arrangement of the components. The components shown in the figure may be implemented by hardware, software, or a combination of software and hardware.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A data transmission method, comprising:

   receiving M pieces of sidelink data on X carriers, wherein the M pieces of sidelink data comprise first sidelink data, the X carriers comprise a first carrier, the first sidelink data is located on the first carrier, X is an integer greater than 0, and M is an integer greater than or equal to X; and
   sending, on a second carrier in the X carriers, first sidelink feedback information corresponding to the first sidelink data, wherein
   a first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources.

2. A data transmission method, comprising:

   sending M pieces of sidelink data on X carriers, wherein the M pieces of sidelink data comprise first sidelink data, the X carriers comprise a first carrier, the first sidelink data is located on the first carrier, X is an integer greater than 0, and M is an integer greater than or equal to X; and

receiving, on a second carrier in the X carriers, first sidelink feedback information corresponding to the first sidelink data, wherein

a first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources.

3. The method according to claim 1 or 2, wherein the method further comprises:

determining, based on third information, that a second resource set on the second carrier comprises a PSFCH resource corresponding to a first resource set on the first carrier, wherein

the third information indicates that there is a correspondence between the first resource set and at least two resource sets on the at least two carriers, the at least two carriers comprise the second carrier, the first sidelink resource belongs to the first resource set on the first carrier, and the first PSFCH resource belongs to the second resource set.

4. The method according to claim 3, wherein the third information is predefined or preconfigured, or is configured by a network.

5. The method according to any one of claims 1 to 4, wherein the first sidelink resource is located in a first slot, a PSFCH resource in the plurality of PSFCH resources that belongs to the first resource set is located in a second slot, a PSFCH resource in the plurality of PSFCH resources that belongs to the second resource set is located in a third slot, and an index of the second slot is the same as an index of the third slot, wherein the first sidelink resource belongs to the first resource set on the first carrier, and the first PSFCH resource belongs to the second resource set on the second carrier.

6. The method according to any one of claims 1 to 4, wherein the first sidelink resource is located in a first slot, a PSFCH resource in the plurality of PSFCH resources that belongs to the second resource set is located in a third slot, the third slot is determined based on the first slot and first duration, and the first PSFCH resource belongs to the second resource set on the second carrier.

7. The method according to any one of claims 1 to 4, wherein the first sidelink resource is located in a first slot, a PSFCH resource in the plurality of PSFCH resources that belongs to the first resource set is located in a second slot, and a PSFCH resource in the plurality of PSFCH resources that belongs to the second resource set is located in a third slot, wherein

the first sidelink resource belongs to the first resource set on the first carrier, the first PSFCH resource belongs to the second resource set on the second carrier, the second slot is determined based on the first slot and first duration, and the third slot is determined based on the first slot and second duration.

8. The method according to any one of claims 1 to 6, wherein the first PSFCH resource belongs to the second resource set on the second carrier, and the method further comprises:
determining a first PSFCH frequency domain resource set based on first information, wherein the first PSFCH frequency domain resource set comprises at least one PSFCH frequency domain resource unit located in the second resource set, the first information indicates the at least one PSFCH frequency domain resource unit, and a PSFCH frequency domain resource unit comprised in the first PSFCH resource is one of the at least one PSFCH frequency domain resource unit.

9. The method according to claim 8, wherein the first information is predefined or preconfigured, or is configured by the network.

10. The method according to claim 8 or 9, wherein the at least one PSFCH frequency domain resource unit is used to transmit sidelink feedback information corresponding to sidelink data in at least one resource set, the at least one resource set comprises the first resource set but does not comprise the second resource set, and the first sidelink resource belongs to the first resource set.

11. The method according to claim 8 or 9, wherein the at least one PSFCH frequency domain resource unit is used to transmit sidelink feedback information corresponding to sidelink data in the first resource set.

12. The method according to any one of claims 8 to 11, wherein the second resource set comprises N physical resource blocks, the first information comprises N bits, N is an integer greater than 0, and the N bits one-to-one correspond to the N physical resource blocks; and

when a value of a first bit in the N bits is a first value, it indicates that a physical resource block in the N physical resource blocks that corresponds to the first bit is a PSFCH frequency domain resource unit used to transmit the sidelink feedback information; or
when a value of a first bit is a second value, it indicates that a physical resource block in the N physical resource blocks that corresponds to the first bit is not a PSFCH frequency domain resource unit used to transmit the sidelink feedback information.

13. The method according to claim 8, wherein the method further comprises:

determining, based on the first PSFCH frequency domain resource set, a quantity $M_{\text{subch, slot}}^{\text{PSFCH}}$ of PSFCH frequency domain resource units in the second resource set that correspond to a subchannel in the first resource set.

14. The method according to claim 13, wherein the method further comprises:

determining, based on second information and the quantity $M_{\text{subch, slot}}^{\text{PSFCH}}$ of PSFCH frequency domain resource units, $R_{PRB,\,CS}^{PSFCH}$ PSFCH resources in the second resource set that correspond to the first sidelink resource.

15. The method according to claim 13, wherein the first PSFCH frequency domain resource set is used to transmit sidelink feedback information corresponding to sidelink data in at least one resource set, and the quantity $M_{\text{subch, slot}}^{\text{PSFCH}}$ of PSFCH frequency domain resource units satisfies the following form:

$$M_{\text{subch, slot}}^{\text{PSFCH}} = M_{\text{PRB, set}}^{\text{PSFCH}} / \left( \sum\nolimits_{i=1}^{n} \left( N_{\text{subch,i}} \right) \cdot N_{\text{PSSCH}}^{\text{PSFCH}} \right), \text{ wherein}$$

wherein $M_{\text{PRB, set}}^{\text{PSFCH}}$ represents a quantity of PSFCH frequency domain resource units comprised in the first PSFCH frequency domain resource set, $N_{\text{subch,i}}$ represents a quantity of subchannels comprised in an $i^{\text{th}}$ resource set in the at least one resource set, and $N_{\text{PSSCH}}^{\text{PSFCH}}$ represents a periodicity of a PSFCH resource corresponding to the second resource set.

16. The method according to claim 13, wherein the first PSFCH frequency domain resource set is used to transmit sidelink feedback information corresponding to sidelink data in the first resource set, and the quantity $M_{\text{subch, slot}}^{\text{PSFCH}}$ of PSFCH frequency domain resource units satisfies the following form:

$$M_{\text{subch, slot}}^{\text{PSFCH}} = M_{\text{PRB, set}}^{\text{PSFCH}} / \left( N_{\text{subch,1}} \cdot N_{\text{PSSCH}}^{\text{PSFCH}} \right), \text{ wherein}$$

wherein $M_{\text{PRB, set}}^{\text{PSFCH}}$ represents a quantity of PSFCH frequency domain resource units comprised in the first PSFCH frequency domain resource set, $N_{\text{subch,1}}$ represents a quantity of subchannels comprised in the first resource set, and $N_{\text{PSSCH}}^{\text{PSFCH}}$ represents a periodicity of a PSFCH resource corresponding to the second resource set.

17. The method according to claim 14, wherein the method further comprises:

determining the first PSFCH resource in the $R_{PRB,\,CS}^{PSFCH}$ PSFCH resources based on a first identifier and a second identifier, wherein
the first identifier is located in the first sidelink data, and the second identifier is preconfigured or preset, or is configured by the network, or is indicated by using higher layer signaling.

18. The method according to any one of claims 1 and 3 to 17, wherein the method further comprises:

sending, on the second carrier, second sidelink feedback information corresponding to second sidelink data, wherein

the M pieces of sidelink data comprise the second sidelink data, and the second sidelink data is located on the second carrier.

19. A communication apparatus, comprising:

a processing unit, configured to receive M pieces of sidelink data on X carriers by using a communication unit, wherein the M pieces of sidelink data comprise first sidelink data, the X carriers comprise a first carrier, the first sidelink data is located on the first carrier, X is an integer greater than 0, and M is an integer greater than or equal to X; and

the processing unit, configured to send, on a second carrier in the X carriers by using the communication unit, first sidelink feedback information corresponding to the first sidelink data, wherein

a first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources.

20. A communication apparatus, comprising:

a processing unit, configured to send M pieces of sidelink data on X carriers by using a communication unit, wherein the M pieces of sidelink data comprise first sidelink data, the X carriers comprise a first carrier, the first sidelink data is located on the first carrier, X is an integer greater than 0, and M is an integer greater than or equal to X; and

the processing unit, configured to receive, on a second carrier in the X carriers by using the communication unit, first sidelink feedback information corresponding to the first sidelink data, wherein

a first sidelink resource on which the first sidelink data is located corresponds to a plurality of physical sidelink feedback channel PSFCH resources, the plurality of PSFCH resources are located on at least two carriers, the first sidelink feedback information is located on a first PSFCH resource, and the first PSFCH resource is one of the plurality of PSFCH resources.

21. A communication apparatus, comprising a unit configured to perform the method according to any one of claims 1 to 18.

22. A communication apparatus, comprising a processor, wherein the processor is coupled to a memory, the memory stores a computer program, and the processor is configured to invoke the computer program in the memory, so that the method according to any one of claims 1 to 18 is performed.

23. A computer-readable storage medium, wherein the storage medium stores a computer program or instructions, and when the computer program or instructions are executed by a computer, the method according to any one of claims 1 to 18 is implemented.

24. A computer program product, wherein when a computer reads and executes the computer program product, the method according to any one of claims 1 to 18 is performed.

FIG. 1A

FIG. 1B

FIG. 1C

CU

CU-CP
RRC
PDCP-C

E1

CU-UP
SDAP
PDCP-U

F1-C

F1-U

RLC
MAC
PHY

DU

FIG. 2

CC

BWP

Resource pool

Resource pool

Frequency domain

Time domain

FIG. 3A

| Bitmap | | | | Bitmap (repeated) | | | | ... | Bitmap (repeated) | | |
|---|---|---|---|---|---|---|---|---|---|---|---|
| Slot 0 | Slot 1 | ... | Slot 7 | Slot 8 | Slot 9 | ... | Slot 15 | Slot 16 | ... | | Slot N |

FIG. 3B

Bitmap: 11001110

Slot used for an SL

Normal slot

Starting resource block sequence number

Subchannel 1 — $n_{CH}$

Subchannel 2 — $n_{CH}$

...

Subchannel $N$ — $n_{CH}$

Spectrum

FIG. 3C

FIG. 3D

| PRB | 0 | 1 | 2 | ... | 11 | 12 | 13 | Bitmap |
|---|---|---|---|---|---|---|---|---|
| 0 | | | | | ▨ | ▨ | | 1 |
| 1 | | | | | ▨ | ▨ | | 1 |
| 2 | | | | | ▨ | ▨ | | 1 |
| 3 | | | | | ▨ | ▨ | | 1 |
| 4 | | | | | | | | 0 |
| 5 | | | | | | | | 0 |
| 6 | | | | | | | | 0 |
| 7 | | | | | | | | 0 |
| 8 | | | | | | | | 0 |
| 9 | | | | | | | | 0 |
| 10 | | | | | ▨ | ▨ | | 1 |
| 11 | | | | | ▨ | ▨ | | 1 |
| 12 | | | | | ▨ | ▨ | | 1 |
| 13 | | | | | ▨ | ▨ | | 1 |
| 14 | | | | | | | | 0 |
| 15 | | | | | | | | 0 |
| 16 | | | | | | | | 0 |
| 17 | | | | | | | | 0 |
| 18 | | | | | | | | 0 |
| 19 | | | | | | | | 0 |
| 20 | | | | | ▨ | ▨ | | 1 |
| 21 | | | | | ▨ | ▨ | | 1 |
| 22 | | | | | ▨ | ▨ | | 1 |
| 23 | | | | | ▨ | ▨ | | 1 |
| 24 | | | | | | | | 0 |
| 25 | | | | | | | | 0 |
| 26 | | | | | | | | 0 |
| 27 | | | | | | | | 0 |
| 28 | | | | | | | | 0 |
| 29 | | | | | | | | 0 |

▨ PSFCH resource

FIG. 3E

| PSSCH | PSSCH | PSSCH | PSSCH | ▨ | PSSCH | PSSCH | PSSCH | PSSCH | ▨ | PSSCH |

0    1    2    3    4    5    6    7    8

▨ PSFCH

FIG. 3F

FIG. 3G

```
                                    0
                                    1
                      ...           ...
                                    10
                                    11
                      ...           ...
                                    20
                                    21
                      ...
Frequency                           ...
domain

            Interlace
            (interlace) #0
```

FIG. 3H

```
┌──────────────┐              ┌──────────────┐
│ First device │              │ Second device│
└──────────────┘              └──────────────┘
        │                             │
┌─────────────────────────┐          │
│ Step 401: The first     │          │
│ device sends M pieces   │          │
│ of sidelink data on X   │          │
│ carriers                │          │
└─────────────────────────┘          │
        │   M pieces of sidelink data │
        │────────────────────────────▶│
        │                             │
        │           ┌─────────────────────────┐
        │           │ Step 402: The second    │
        │           │ device sends, on a      │
        │           │ second carrier in the X │
        │           │ carriers, first sidelink│
        │           │ feedback information    │
        │           │ corresponding to first  │
        │           │ sidelink data           │
        │           └─────────────────────────┘
        │   First sidelink            │
        │   feedback information      │
        │◀────────────────────────────│
```

Step 402b: The second device sends, in a third slot, P pieces of sidelink feedback information corresponding to P pieces of sidelink data in the M pieces of sidelink data

P pieces of sidelink feedback information

FIG. 4

CC 1

CC 2

CC 3

CC 4

CC 1

CC 2

CC on which data is
sent

CC on which data is
received

FIG. 5

CC 1

CC 2

PSCCH resource or
PSSCH resource

CC 3

CC 4

PSFCH
resource

FIG. 6

FIG. 7

FIG. 8

FIG. 9

FIG. 10

FIG. 11

FIG. 12

FIG. 13

| PRB | 0 | 1 | 2 | ... | 11 | 12 | 13 | First PSFCH frequency domain information | Second PSFCH frequency domain information |
|---|---|---|---|---|---|---|---|---|---|
| 0 | | | | | | | | 1 | 0 |
| 1 | | | | | | | | 1 | 0 |
| 2 | | | | | | | | 1 | 0 |
| 3 | | | | | | | | 1 | 0 |
| 4 | | | | | | | | 0 | 0 |
| 5 | | | | | | | | 0 | 0 |
| 6 | | | | | | | | 0 | 0 |
| 7 | | | | | | | | 0 | 0 |
| 8 | | | | | | | | 0 | 0 |
| 9 | | | | | | | | 0 | 0 |
| 10 | | | | | | | | 1 | 0 |
| 11 | | | | | | | | 1 | 0 |
| 12 | | | | | | | | 1 | 0 |
| 13 | | | | | | | | 1 | 0 |
| 14 | | | | | | | | 0 | 0 |
| 15 | | | | | | | | 0 | 0 |
| 16 | | | | | | | | 0 | 0 |
| 17 | | | | | | | | 0 | 0 |
| 18 | | | | | | | | 0 | 0 |
| 19 | | | | | | | | 0 | 0 |
| 20 | | | | | | | | 0 | 1 |
| 21 | | | | | | | | 0 | 1 |
| 22 | | | | | | | | 0 | 1 |
| 23 | | | | | | | | 0 | 1 |
| 24 | | | | | | | | 0 | 0 |
| 25 | | | | | | | | 0 | 0 |
| 26 | | | | | | | | 0 | 0 |
| 27 | | | | | | | | 0 | 0 |
| 28 | | | | | | | | 0 | 0 |
| 29 | | | | | | | | 0 | 0 |

First PSFCH frequency domain resource set

Second PSFCH frequency domain resource set

FIG. 14

EP 4 776 551 A1

FIG. 15

EP 4 776 551 A1

| PRB | 0 | 1 | 2 | ... | 11 | 12 | 13 | PSFCH frequency domain information 1 | PSFCH frequency domain information 2 | PSFCH frequency domain information 3 |
|---|---|---|---|---|---|---|---|---|---|---|
| 0 |  |  |  |  |  |  |  | 1 | 0 | 0 |
| 1 |  |  |  |  |  |  |  | 1 | 0 | 0 |
| 2 |  |  |  |  |  |  |  | 1 | 0 | 0 |
| 3 |  |  |  |  |  |  |  | 1 | 0 | 0 |
| 4 |  |  |  |  |  |  |  | 0 | 0 | 0 |
| 5 |  |  |  |  |  |  |  | 0 | 0 | 0 |
| 6 |  |  |  |  |  |  |  | 0 | 0 | 0 |
| 7 |  |  |  |  |  |  |  | 0 | 0 | 0 |
| 8 |  |  |  |  |  |  |  | 0 | 0 | 0 |
| 9 |  |  |  |  |  |  |  | 0 | 0 | 0 |
| 10 |  |  |  |  |  |  |  | 0 | 1 | 0 |
| 11 |  |  |  |  |  |  |  | 0 | 1 | 0 |
| 12 |  |  |  |  |  |  |  | 0 | 1 | 0 |
| 13 |  |  |  |  |  |  |  | 0 | 1 | 0 |
| 14 |  |  |  |  |  |  |  | 0 | 0 | 0 |
| 15 |  |  |  |  |  |  |  | 0 | 0 | 0 |
| 16 |  |  |  |  |  |  |  | 0 | 0 | 0 |
| 17 |  |  |  |  |  |  |  | 0 | 0 | 0 |
| 18 |  |  |  |  |  |  |  | 0 | 0 | 0 |
| 19 |  |  |  |  |  |  |  | 0 | 0 | 0 |
| 20 |  |  |  |  |  |  |  | 0 | 0 | 1 |
| 21 |  |  |  |  |  |  |  | 0 | 0 | 1 |
| 22 |  |  |  |  |  |  |  | 0 | 0 | 1 |
| 23 |  |  |  |  |  |  |  | 0 | 0 | 1 |
| 24 |  |  |  |  |  |  |  | 0 | 0 | 0 |
| 25 |  |  |  |  |  |  |  | 0 | 0 | 0 |
| 26 |  |  |  |  |  |  |  | 0 | 0 | 0 |
| 27 |  |  |  |  |  |  |  | 0 | 0 | 0 |
| 28 |  |  |  |  |  |  |  | 0 | 0 | 0 |
| 29 |  |  |  |  |  |  |  | 0 | 0 | 0 |

PSFCH frequency domain resource set 1

PSFCH frequency domain resource set 2

PSFCH frequency domain resource set 3

FIG. 16

FIG. 17

FIG. 18

FIG. 19A

| | | | | | | | | | | |
| PSFCH resource set 1 | PSFCH resource set 2 | PSFCH resource set 3 | PSFCH resource set 4 |

FIG. 19B

Communication apparatus 2000

Processing unit 2010

Communication unit 2020

FIG. 20

Communication apparatus 2100

2101

Processor
Instructions

2103

Memory
Instructions

Transceiver
Radio frequency circuit
Antenna

2102

FIG. 21

2200

Processor
2201

Communication interface
2202

Bus

Memory
2203

Power supply circuit
2204

FIG. 22

## INTERNATIONAL SEARCH REPORT

| International application No. |
| --- |
| **PCT/CN2024/111161** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXTC, 3GPP, IEEE, CNKI: 车联网, 时隙, 载波, 载波聚合, 物理资源块, 反馈, CA, carrier, PRB, PSFCH, PSSCH, V2X, feedback, ACK

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | WO 2023093531 A1 (HUAWEI TECHNOLOGIES CO., LTD.) 01 June 2023 (2023-06-01) description, paragraphs 0092-0258 | 1-24 |
| A | CN 115553005 A (GUANGDONG OPPO MOBILE TELECOMMUNICATIONS CORP., LTD.) 30 December 2022 (2022-12-30) entire document | 1-24 |
| A | CN 115701782 A (APPLE INC.) 10 February 2023 (2023-02-10) entire document | 1-24 |
| A | US 2022200737 A1 (QUALCOMM INC.) 23 June 2022 (2022-06-23) entire document | 1-24 |
| A | WO 2023004725 A1 (GUANGDONG OPPO MOBILE TELECOMMUNICATIONS CORP., LTD.) 02 February 2023 (2023-02-02) entire document | 1-24 |
| A | MODERATOR (HUAWEI). "FL Summary#1 for AI 9.4.1.2 SL-U Physical Channel Design Framework" *3GPP TSG-RAN WG1 Meeting #109-e, R1-2205238*, 20 May 2022 (2022-05-20), entire document | 1-24 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 October 2024** | **23 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/111161**

| Patent document cited in search report | | | Publication date (day/month/year) | Patent family member(s) | | | Publication date (day/month/year) |
|---|---|---|---|---|---|---|---|
| WO | 2023093531 | A1 | 01 June 2023 | EP | 4422316 | A1 | 28 August 2024 |
| | | | | CN | 116170884 | A | 26 May 2023 |
| CN | 115553005 | A | 30 December 2022 | WO | 2021232382 | A1 | 25 November 2021 |
| | | | | US | 2023069882 | A1 | 09 March 2023 |
| | | | | EP | 4156811 | A1 | 29 March 2023 |
| CN | 115701782 | A | 10 February 2023 | WO | 2022252144 | A1 | 08 December 2022 |
| | | | | EP | 4122149 | A1 | 25 January 2023 |
| | | | | US | 2023269754 | A1 | 24 August 2023 |
| US | 2022200737 | A1 | 23 June 2022 | EP | 4264862 | A1 | 25 October 2023 |
| | | | | WO | 2022133376 | A1 | 23 June 2022 |
| | | | | CN | 116584067 | A | 11 August 2023 |
| WO | 2023004725 | A1 | 02 February 2023 | CN | 117242851 | A | 15 December 2023 |

Form PCT/ISA/210 (patent family annex) (July 2022)

**EP 4 776 551 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311162646